(19) **Europäisches Patentamt / European Patent Office / Office européen des brevets**

(11) **EP 3 283 576 B1**

(12) **EUROPÄISCHE PATENTSCHRIFT**

(45) Veröffentlichungstag und Bekanntmachung des Hinweises auf die Patenterteilung:
**12.06.2019 Patentblatt 2019/24**

(21) Anmeldenummer: **16716529.9**

(22) Anmeldetag: **12.04.2016**

(51) Int Cl.:
***C09D 5/00*** *(2006.01)*

(86) Internationale Anmeldenummer:
**PCT/EP2016/057956**

(87) Internationale Veröffentlichungsnummer:
**WO 2016/166074 (20.10.2016 Gazette 2016/42)**

(54) **METALLNANOPARTIKELHALTIGE, DISPERSE FORMULIERUNG**

DISPERSE FORMULATION CONTAINING METAL NANOPARTICLES

FORMULATION DE DISPERSION CONTENANT DES NANOPARTICULES MÉTALLIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.04.2015 DE 102015105831**

(43) Veröffentlichungstag der Anmeldung:
**21.02.2018 Patentblatt 2018/08**

(73) Patentinhaber: **Rent A Scientist GmbH**
**93055 Regensburg (DE)**

(72) Erfinder:
• **MAIER, Georg**
**93047 Regensburg (DE)**
• **NUSKO, Robert**
**93109 Wiesent (DE)**
• **PARZL, Adi**
**93055 Regensburg (DE)**
• **ZECH, Oliver**
**93047 Regensburg (DE)**

(74) Vertreter: **Glück Kritzenberger Patentanwälte PartGmbB**
**Hermann-Köhl-Strasse 2a**
**93049 Regensburg (DE)**

(56) Entgegenhaltungen:
**WO-A1-2011/076203    WO-A2-2009/128973**
**WO-A2-2012/022332**

**Beschreibung**

**Technisches Gebiet**

Die Erfindung bezieht sich auf eine metallnanopartikelhaltige, disperse Formulierung zur Herstellung einer leitfähigen Schicht sowie auf ein Verfahren zur Herstellung einer solchen metallnanopartikelhaltigen, dispersen Formulierung.

**Stand der Technik**

**Leitfähige Funktionalisierung von Textilien**

Eine leitfähige Funktionalisierung von Textilen kann gemäß dem Stand der Technik durch unterschiedliche Additive erzielt werden. Der Begriff Textil, wie er hier verwendet wird, umfasst natürliche und synthetische textile Fasern, linienförmige textile Gebilde wie Garne und Zwirne, flächenförmige textile Gebilde wie Gewebe, Gewirke, Gestricke, Geflechte, Nähgewirke, Vliesstoffe und Filze, sowie räumliche textile Gebilde wie Schläuche und textile Halbzeuge.

Für eine leitfähige Funktionalisierung ist der Einsatz von Kohlenstoff basierten Materialien wie Leitruß, Kohlenstoffmikropartikel und Kohlenstoffnanoröhren (CNT) bzw. einer Kombination daraus gängig (Jost, K., Perez, C. R., McDonough, J. K., Presser, V., Heon, M., Dion, G., & Gogotsi, Y. (2011). Carbon coated textiles for flexible energy storage. Energy & Environmental Science, 4(12), 5060. doi:10.1039/c1ee02421c; Hecht, D. S., Hu, L., & Grüner, G. (2007). Electronic properties of carbon nanotube/fabric composites. Current Applied Physics, (1), 60-63. doi:10.1016/j.cap.2005.09.001). Die Kohlenstoff basierten Materialien werden in Form von Beschichtungen auf einen textilen Träger oder ein Garn aufgebracht. Durch den Einsatz von Kohlenstoff wird das zu beschichtende Substrat schwarz gefärbt, wodurch die mögliche Farbpalette von leitfähigen textilen Substraten stark eingeschränkt und auf dunkle Farbtöne beschränkt wird. Hinzu kommt, dass aufgrund der Materialeigenschaften von Kohlenstoff nur ein begrenzter Leitfähigkeitsbereich zugänglich ist. Mit Leitruß funktionalisierte Substrate sind deshalb nur für die Bereiche Ableitfähigkeit und geringe elektrische Leitfähigkeit einsetzbar (typischerweise Megaohm bis eine hundert Ohm). Der benötigte Volumenanteil an Leitruß zum Erhalt eines durchgehenden leitfähigen Netzwerks liegt zudem im zweistelligen Prozentbereich.

Weiterhin ist der Einsatz von leitfähigen Polymeren zur Beschichtung von textilen Substraten dem Fachmann bekannt (Ding, Y., Invernale, M. a, & Sotzing, G. a. (2010). Conductivity trends of PEDOT-PSS impregnated fabric and the effect of conductivity on electrochromic textile. ACS Applied Materials & Interfaces, 2(6), 1588-93. doi:10.1021/am100036n). Beispielsweise können Polymere auf Basis von Polythiophen, Polypyrrol und Polyanilin eingesetzt werden. Nachteil dieser Schichten ist die geringe Stabilität gegenüber Feuchtigkeit, Luftfeuchtigkeit, UV-Licht und mechanischer Belastung. Um ausreichende Leitfähigkeitswerte zu erhalten, müssen Schichtdicken auf ein Textil aufgebracht werden, die zu einer deutlichen Farbänderung des Gewebes im sichtbaren Bereich führen. Beispielsweise tritt für den Einsatz von Poly-3,4-ethylendioxythiophen eine Blaufärbung auf und für Polyanilin eine deutliche Grünfärbung. Leitfähige Polymere sind außerdem empfindlich gegenüber Oxidationsmitteln und aggressiven Reinigungsmitteln, so dass Waschbarkeit und Langlebigkeit nach wie vor ein Problem darstellen.

Außerdem sind Materialien auf dem Markt erhältlich, bei denen leitfähige Fäden in einen Stoff mit integriert sind, beispielsweise durch Einweben. Hierbei kann es sich um massive metallische Drähte oder galvanisch beschichtete Textilfasern handeln. Durch diese Ausführungsformen kann keine gleichförmige Leitfähigkeit über den gesamten Stoff, sondern lediglich entlang der metallischen Fasern erhalten werden, die mitunter von der Maschenweite abhängig ist. Um bei eingesponnenen Metallfasern in einem Textil Leitfähigkeit zu erhalten, ist ein relativ hoher Gewichtsanteil an Metallfasern notwendig, in der Regel mehr als 5%. Beispielsweise beschreibt DE 40 23 287 C2 ein Tarnnetz aus Polyesterwirkware, in dem 5-15% Metallfasern in die Wirkware mit eingesponnen sind.

Eine andere Möglichkeit leitfähige Textilien zu erhalten besteht in einer Beschichtung mit Metall. Silber, Kupfer und Nickel beschichtete Textilien sind bekannt. Die Metalle können mit verschiedenen Methoden auf Textilien aufgebracht werden, beispielsweise durch Gasphasenabscheidung, Besputtern, chemische Metallisierung, wie etwa die Reduktion komplexierter Salze und elektrochemische Metallabscheidung.

Des Weiteren weisen Kohlenstofffasern elektrische Leitfähigkeit auf. Der Begriff Kohlenstofffaser, wie er hier verwendet wird, bezieht sich nicht auf eine Beschichtung, sondern um durchgängig aus Kohlenstoff bestehendes Material. Häufig werden derartige leitfähige Kohlenstofffasern in einem Pyrolyseprozess aus organischen Ausgangsmaterialien hergestellt, wobei oberhalb von 1800°C die Graphitierung einsetzt. Kohlenstofffasern sind in Form von Endlostauen, Stapelfasern, Garnen, Zwirnen und textilen Flächengebilden wie Geweben und Filzen herstellbar. Durch Verstrecken können außerdem gute Festigkeiten der Faser erzielt werden. Nachteile sind wiederum die schwarze Farbe und die Einschränkung auf das Fasermaterial Kohlenstoff. Außerdem ist die breite Palette an textilen Fasern aus unterschiedlichen Polymeren und verschiedensten physikalischen Eigenschaften nicht zugänglich.

Im Bereich der IR-Reflexion spielt insbesondere die Reflexion in Wellenlängenbereichen zwischen 3 $\mu$m und 50 $\mu$m eine Rolle. Gemäß dem Stand der Technik können hierfür unterschiedliche Technologien eingesetzt werden. Beispielsweise werden polierte Metalloberflächen oder sehr dünne, teils Nanometer dünne Metallschichten auf Substraten eingesetzt. Auch eine Beimischung von Metall- oder Metalloxidpigmenten zu Beschichtungsformulierungen ist bekannt, beispielsweise Aluminium-Pigmente. Um eine helle Farbe zu erhalten ist des Weiteren der Einsatz von mit TiO$_2$ beschichtetem Aluminium bekannt. Auch low e Pigmente auf Basis von transparenten leitfähigen Oxiden sind bekannt. Ferner können Metallpigmente mit leitfähigem Polymer gemischt werden. Unterschiedliche Metalle in Plättchenform sind auf dem Markt erhältlich und können einer Beschichtungsrezeptur beigemischt werden. Der Nachteil der genannten Lösungen ist der hohe Füllgrad, der zur Realisierung der gewünschten Eigenschaften benötigt wird. Es muss ein relativ hoher Anteil an Partikeln (Kugeln oder Plättchen) zugesetzt werden, um die gewünschten Eigenschaften zu erzielen.

Die Tarnung von Objekten und Personen kann mit Hilfe von Textilien, beispielsweise in Form von Tarnnetzen oder Tarnanzügen realisiert werden. Generell wird im Bereich Tarnung zwischen Tarnung im sichtbaren Wellenlängenbereich, sowie Tarnung gegen Radar- und Infrarotortung, thermischer Tarnung und Geruchstarnung unterschieden. Häufig werden die verschiedenen Formen der Tarnung miteinander kombiniert.

Im Bereich Tarnung im Radar- und Infrarotbereich spielen mitunter leitfähige Funktionalisierungen, insbesondere von Textilien eine Rolle. Generell ist für eine abschirmende Wirkung das Vorhandensein freier Ladungsträger notwendig, die in Form von Elektronen über die leitfähige Fläche verschmiert sind. Die freien Ladungsträger werden durch eine elektromagnetische Welle zu Oszillationen / Schwingungen angeregt. Mit der Größe einer vernetzten leitfähigen Region steigt die Beweglichkeit der Ladungsträger an. Für eine Abschirmung kann in erster Näherung die Faustregel angewendet werden, dass sich die Größe der leitfähigen Region mindestens im Bereich der halben Wellenlänge bewegen soll. Folglich ändern sich die Anforderungen je nachdem, in welcher Frequenzregion sich das elektromagnetische Feld befindet. Während sich Radarstrahlen im Mikrowellenbereich befinden, befindet sich thermisches Infrarot im $\mu$m Bereich. Folglich müssen je nach Abschirmzielgröße unterschiedliche Parameter erreicht werden.

Der Einsatz leitfähig funktionalisierter Textilien im Bereich Tarnung ist aus dem Stand der Technik bekannt. So wird in EP 2 064 512 B1 die Verwendung von leitfähigen Polymeren zur Beschichtung textiler Träger, insbesondere PEDOT (Poly(3,4-ethylenedioxythiophene)) genannt. Die Schrift offenbart Tarnvorrichtung für Personen und Objekte, bei dem ein gewirktes oder gewobenes Gut mit einer Beschichtung auf Basis von Polythiophen versehen ist. Nachteile bei der Verwendung leitfähiger Polymere ist der eingeschränkte Leitfähigkeitsbereich, der im Vergleich zu metallischen Drähten abgedeckt werden kann. Außerdem weisen leitfähige Polymere Nachteile in Bezug auf Alterungseffekte, insbesondere bei der Anwesenheit von Feuchte und UV-Licht und bei der Waschbeständigkeit auf.

Weiterhin ist die Verwendung von Metallfasern und Absorberpigmenten (DE 40 23 287 C2), sowie Metallfasern in der Wirkware (EP 1 365 206 B1) bekannt. Nachteile von Metallfasern sind, dass Sie mit bloße Auge sichtbar sind, die textilen Eigenschaften beeinflussen und außerdem schwer zu prozessieren sind.

Weiterhin sind Tarnnetze bekannt, in die ein Gewirk aus Polyester und metallummantelten Polyamidfasern eingebracht ist (EP 1 914 505 B1). Bei Anwendung in Tarnanzügen ist ein textiler Träger mindestens teilweise mit einem elektrisch leitenden Material ummantelt. Nachteile dieser Lösung sind die Beschränkung der Leitfähigkeit auf diskrete Bereiche, die Beeinflussung der textilen Eigenschaften, sowie Farbe, Haptik und Duktilität.

## Metallische Nanomaterialien in optoelektronischen Anwendungen

Abseits des textilen Bereichs können leitfähige Funktionen in Form von Beschichtungen auf transparente Substrate wie Glas oder Folien aufgebracht werden. Transparente, leitfähige Beschichtungen werden vielfach durch metallische Nanomaterialien realisiert. Als metallische Nanostrukturen dienen auf Grund der exzellenten elektrischen Eigenschaften von elementarem Silber, Silbernanomaterialien, und darunter speziell draht- oder stabförmige Silbernanostrukturen.

Für optoelektronische Anwendungen können Beschichtungen von metallischen Nanodrähten auf transparenten Substraten wie Glas oder Folien verwendet werden. Mit Hilfe der metallischen Nanodrähte, insbesondere Silbernanodrähte, können optisch transparente Filme auf durchsichtigen Substraten, die eine geringe Oberflächenrauigkeit aufweisen, erzielt werden. Insbesondere können durch das Aufbringen von Silbernanodrähten leitfähige Folien und Gläser hergestellt werden, beispielsweise für Anwendungen im Bereich organischer Photovoltaik (Guo, F., Zhu, X., Forberich, K., Krantz, J., Stubhan, T., Salinas, M., Brabec, C. J. (2013). ITO-Free and Fully Solution-Processed Semitransparent Organic Solar Cells with High Fill Factors. Advanced Energy Materials, 3(8), 1062-1067. doi:10.1002/aenm.201300100).

Der Begriff "Nanodraht", wie er hier verwendet wird beschreibt Strukturen, die in zumindest zwei Raumrichtungen ähnliche Ausdehnungen im Bereich von 1 nm bis 1000 nm aufweisen und in der dritten Raumrichtung eine Ausdehnung von zumindest dem 5-fachen der beiden anderen Ausdehnungen besitzen.

Die Herstellung von Silbernanodrähten ist in der wissenschaftlichen Literatur (Sun, Y., Yin, Y., Mayers, B. T., Herricks, T., & Xia, Y. (2002). Uniform Silver Nanowires Synthesis by Reducing AgNO3 with Ethylene Glycol in the Presence of Seeds and Poly (Vinyl Pyrrolidone). Chemistry of Materials, 14(11), 4736-4745; Caswell, K. K., Bender, C. M., Murphy, C. J., & Carolina, S. (2003). Seedless, Surfactantless Wet Chemical Synthesis of Silver Nanowires. Nano, 35, 3-5) vielfach beschrieben und auch aus Patentschriften bekannt, zum Beispiel in US 7 585 349 B2, US 7 922 787 B2, US 8 709 125 B2 und in DE 10 2010 017 706 B4. Die Herstellung wird gemäß dem Stand der Technik in einem sogenannten Polyolprozess realisiert, bei dem $Ag^+$ zu elementarem Silber reduziert wird. Wichtig ist das Vorhandensein eines Schutzkolloids, gängigerweise Polyvinylpyrrolidon (PVP), um Nanodrähte in den gewünschten Abmessungen zu erhalten. Die so hergestellten Silbernanodrähte sind mit PVP als Schutzkolloid umhüllt. Da PVP selbst als Isolator wirkt sind die metallischen Nanodrähte je nach Dicke der PVP Schicht auf der Silberoberfläche leitfähig bis isolierend. Durch Wasch- und Reinigungsprozesse kann PVP partiell von der Silberoberfläche entfernt und folglich die elektrische Leitfähigkeit signifikant verbessert werden. Um PVP und andere Verunreinigungen oder nicht gewünschte Nebenprodukte zu entfernen, werden in der Literatur verschiedene Waschprozesse beschrieben, beispielsweise mehrfache Zentrifugation (Hu, L., Kim, H. S., Lee, J.-Y., Peumans, P., & Cui, Y. (2010). Scalable coating and properties of transparent, flexible, silver nanowire electrodes. ACS Nano, 4(5), 2955-63. doi:10.1021/nn1005232). Auch Methoden wie Sedimentation, Filtration (Jarrett, R., & Crook, R. (2013). The Separation of Silver Nanowires from Solution Using a Novel Filtration Technique - A Comparative Study . PVSAT 9 Conference Proceedings., 2-5.) und Querstromfiltration >Pradel, K. C., Sohn, K., & Huang, J. (2011). Cross-flow purification of nanowires. Angewandte Chemie (International Ed. in English), 50(15), 3412-6. doi:10.1002/anie.201100087) werden verwendet. Die Notwendigkeit von Waschschritten gemäß dem Stand der Technik wird unter anderem in WO 2014/127909 A1 verdeutlicht. Hier werden unter anderem die Eigenschaften von Silbernanodrähten untersucht, die einer unterschiedlichen Anzahl an Waschschritten unterzogen wurden. Durch die Waschschritte wurde das Schutzkolloid (PVP) zumindest teilweise entfernt, dies wurde durch Elementaranalyse belegt. Es wurde gefunden, dass sich die Eigenschaften der Silbernanodrähte, insbesondere in Kombination mit einem leitfähigen Polymer durch das partielle entfernen von PVP verbessern, vor allem hinsichtlich der elektrischen Leitfähigkeit. Der Stand der Technik sieht eine Reinigung der Silbermaterialien vor der Verwendung als elektrisch leitfähiger Füllstoff als unumgänglich an. Nachteil des Standes der Technik ist der gesteigerte zeitliche und materielle Aufwand, der durch die Waschschritte entsteht und der auch zu einem Verlust der Ausbeute an Silbernanodrähten führt.

Auf diese Weise gereinigte, elektrisch leitfähige Silberstrukturen stellen damit den elektrisch leitfähigen Füllstoff dar, der in weiteren Verfahrensschritten mit einer filmbildenden Beschichtungsmatrix rezeptiert werden muss, wie beispielsweise in US 8 049 333 B2 beschrieben. Ohne die Verwendung einer Kombination der elektrisch leitfähigen Silberstrukturen mit einer Beschichtungsmatrix in Form chemischer Formulierungen ergeben sich weitere Nachteile bei der Prozessführung zur Herstellung transparenter, elektrisch leitfähiger Beschichtungen. Nachteilig ist hierbei die fehlende Stabilität der aufgebrachten elektrisch leitfähigen Silberstrukturen gegenüber mechanischen Einflüssen, die während der Prozessierung auftreten, wie z.B. Zwischenreinigung, Walzentransport, Beschichtungswerkzeuge etc. Insgesamt führt die Herstellung einer transparenten elektrisch leitfähigen Beschichtung mit synthetisierten Silberstrukturen nach dem aktuellen Stand der Technik zu erheblichen Verlusten von erfahrungsgemäß 30 bis 80 Gewichtsprozent der hergestellten Silberstrukturen. Damit sind der Wirtschaftlichkeit der Herstellung einer anwendbaren, elektrisch leitfähigen Beschichtung sehr enge Grenzen gesetzt.

### Silbernanodrähte für antimikrobielle Anwendungen

Aufgrund des antimikrobiellen Effekts von Silber können Silbernanodrähte auch für antimikrobielle Anwendungen eingesetzt werden. Beispielweise wurden Silbernanodrähte auf Ihre Eignung im Bereich Wasserfiltration getestet (Schoen, D. T., Schoen, A. P., Hu, L., Kim, H. S., Heilshorn, S. C., & Cui, Y. (2010). High speed water sterilization using onedimensional nanostructures. Nano Letters, 10(9), 3628-32. doi:10.1021/nl101944e). Durch Zentrifugation aufgereinigte Silbernanodrähte wurden in Methanol suspendiert und in Kombination mit Kohlenstoffnanoröhren (CNT) auf eine Baumwolloberfläche aufgebracht. Beim Aufbringprozess wurde zunächst ein Baumwolltextil in eine CNT Tinte getaucht und getrocknet. Dadurch wurde ein Oberflächenwiderstand von etwa 100 Ohm/sq. (sq. = Flächenquadrat) erzielt. Anschließend wurden die gewaschenen Silbernanodrähte in Methanol suspendiert, ohne den Zusatz von Additiven auf das Baumwolltextil pipettiert und getrocknet, was eine Oberflächenleitfähigkeit des Hybridmaterials CNT/Silbernanodrähte/Baumwolle von 1 Ohm/sq. zur Folge hatte. Das so hergestellte Material konnte erfolgreich als Filter zur Abtrennung bzw. Inaktivierung von Bakterien verwendet werden. Als nachteilig kann wiederum die schwarze Farbe, das aufwendige Herstellungsverfahren und die fehlende dauerhafte Haftung aufgrund des Fehlens einer bindenden Matrix angesehen werden.

### Metallische Nanomaterialien als Katalysatoren

Elektrochemische und heterogen katalysierte Prozesse laufen zumindest teilweise an Grenzflächen ab. Bei vielen technisch bedeutenden Verfahren wie z.B. der Wasserelektrolyse, bei Brennstoffzellen oder auch in elektrochemischen Synthesen finden die eigentlichen chemischen Reaktionen an der Grenzfläche zwischen einer festen elektrisch leitfähigen Elektrode und einem flüssigen Elektrolyten statt. Häufig bilden sich bei diesen Reaktionen gasförmige Produkte, die von der Reaktionszone abtransportiert werden müssen (z.B. Wasserelektrolyse) oder es müssen gasförmige Reaktionspartner zur Reaktionszone (z.B. Brennstoffzelle) zugeführt werden. Der Einsatz von Katalysatoren an derartigen Grenzflächen ist zur Erzielung wirtschaftlicher Stoffumsätze meistens obligatorisch. Des Weiteren werden die Reaktionsräume zwischen Oxidation und Reduktion bei zahlreichen elektrochemischen Apparaten mittels ionenpermeablen Membranen voneinander getrennt. Diese Membranen erlauben den Ionenfluss von der Ionen erzeugenden Reaktionszone zur Ionen verbrauchenden Reaktionszone, während sie den Elektronenfluss weitgehend unterdrücken (elektrische Isolatoren). Ionen sind häufig direkte Reaktionspartner (Edukte oder Produkte der Teilreaktionen) und müssen deshalb auch direkt von der ionenpermeablen Membran zur Reaktionszone bzw. von der Reaktionszone zur Membran geleitet werden. Wesentliche Anforderungen an die beschriebenen Reaktionszonen sind also:

- Gute elektrische Leitfähigkeit (Zu-/Abfuhr von Elektronen)
- Gute Ionenleitfähigkeit (Zu-/Abfuhr ionischer Reaktionsteilnehmer / Benetzung mit Elektrolyt)
- Porosität (Zu-/Abfuhr flüssiger, gelöster und gasförmiger Reaktionsteilnehmer)
- Hohe spezifische Oberfläche (größere Grenzfläche = größere Reaktionszone)
- Hoher Anteil an Katalysator an der für die Reaktionspartner erreichbaren Oberfläche
- Mechanische Stabilität der Strukturen auch unter starker Anströmung, Gasentwicklung, Schichtaufbau/-abbau
- Zu-/Abfuhr von Reaktionswärme

Diese Anforderungen führten in der Vergangenheit zur Entwicklung einer Vielzahl technischer Lösungen. Von besonderer Bedeutung für elektrochemische Apparate wie Elektrolyseure und Brennstoffzellen ist das Konzept einer Membran-Elektroden-Einheit (membrane electrode assembly = MEA). Eine MEA besteht typischerweise aus einer flachen ionenleitfähigen Polymerelektrolytmembran, die beidseitig mit einer Lage aus kohlenstoffgeträgerten Katalysatorpartikeln beschichtet ist. Die Katalysatorpartikel des Standes der Technik sind üblicherweise sphärische Nanopartikel in der Größenordnung einiger Nanometer. Sie sind je nach Anwendung und Hersteller auf verschiedenartigste, elektrisch leitfähige Kohlenstoffstrukturen abgeschieden. Die Fixierung der Kohlenstoff/Katalysatorpartikel auf der Membran erfolgt üblicherweise mittels ionenleitfähiger Polymere (Ionomere). Die Ionomere sorgen für die ionenleitfähige Anbindung der Membran an die Reaktionszone. Zwischen der Katalysatorschicht und dem Stromkollektor wird üblicherweise eine Gasdiffusionsschicht (gas diffusion layer = GDL) vorgesehen. Sie besteht meist aus Kohlenstoffvlies bzw. Metallvlies. Ihre Aufgaben liegen bei der gleichzeitigen Zu-/Abfuhr von Flüssigkeit, Gas und Elektronen.

Der beschriebene Standard-MEA Aufbau ist für viele Anwendungen weiter verbesserungsbedürftig. Gerade im Hinblick auf elektrische Leitfähigkeit, Porosität, sparsame aber möglichst großflächige Katalysatorverteilung und -anbindung und Maximierung der aktiven Oberfläche besteht Entwicklungsbedarf. Einen Ansatz zur Verbesserung der Standard-MEA beschreibt die WO 2007/061945 A2: ein untereinander verbundenes Netzwerk aus Kohlenstoffnanoröhrchen (carbon nanotube = CNT), das mit Katalysatorpartikeln beschichtet ist, wird anstatt der üblichen sphärischen katalysatorbeschichteten Kohlenstoffpartikel in der MEA eingesetzt. Die in der WO 2007/061945 A2 offenbarten, direkt kontaktierbaren, katalysatorbeladenen, Elektrolyt getränkten CNT-Netzwerke führen zu einer im Vergleich zur Standard-MEA erhöhten Katalysator Nutzung bei gleichzeitig optimierter elektronischer und ionischer Anbindung. Darüber hinaus ermöglichen diese hoch porösen Strukturen effizient Zu-/Abfuhr von Gasen und Flüssigkeiten. Problematisch bleiben bei diesem Ansatz die aufwändige Kontaktierung der einzelnen CNTs untereinander in einem Gasphasenprozess sowie die schwierige Abscheidung und begrenzte Anhaftung der Katalysatorpartikel auf dem CNT-Netzwerk.

Die WO 2007/100811 A2 offenbart die Herstellung und Verwendung von Platin-Nanoröhrchen (Platinum-Nanotube = PtNT) als Elektrokatalysator für Brennstoffzellen. Die beschriebenen Vorzüge der PtNTs als Brennstoffzellen Katalysator gegenüber den katalysatorgeträgerten Kohlenstoffstrukturen sind v.a. der Wegfall von Oxidationsproblemen zwischen Kohlenstoffträger und Katalysator, geringere Überspannung wegen dünnerem Aufbau, gute elektrische Leitfähigkeit in der Katalysatorschicht und gute Katalysatornutzung wegen der hohen spezifischen Oberfläche der PtNTs. Der WO 2007/100811 A2 entsprechend (siehe Beispiel 1.4) werden die PtNTs aus einer verdünnten Dispersion (2 mg/ml) sehr sparsam mit sehr geringem Flächengewicht (40 $\mu$g/cm$^2$) mit in etwa derselben Menge an Nafion Ionomer (25 $\mu$g/cm$^{-2}$) auf einem elektrisch leitfähigen Substrat fixiert. Die ausgebildete Filmdicke beträgt ca. 0,1 $\mu$m. Cyclovoltammogramme (CV) der abgeschiedenen PtNTs zeigen, dass Ströme im Bereich von 0,1 mA bei einer Elektrodenfläche von 0,198 cm$^2$ erreicht werden. Das entspricht einer Stromdichte von 0,5 mA/cm$^2$ bezogen auf die Elektrodenfläche. Wirtschaftlich relevante elektrokatalytische Brennstoffzellenprozesse laufen typischerweise im Bereich von 500 mA/cm$^2$ bis 5.000 mA/cm$^2$ ab. Die WO 2007/100811 A2 lehrt also die Abscheidung zweidimensionaler Schichten aus Nanometallröhrchen und deren Nutzung als Brennstoffzellenkatalysatoren nach deren Fixierung auf einem Substrat mittels Ionomeren. Der Weg zu wirtschaftlich interessanten Stromdichten wird hier nicht offenbart.

Die WO 2012/064768 A2 beschreibt die Verwendung metallischer Nanoröhrchen (Nanotube = NT) und Nanodrähten (Nanowire = NW) als Brennstoffzellenkatalysatoren. Bei den beschriebenen NTs handelt es sich um Pt-, Pd- oder Au-NTs. Bei den NWs handelt es sich um Ag- oder Cu-NWs. Analog zur WO 2007/100811 A2 beschreibt die WO 2012/064768 A2 die erhöhte Katalysatornutzung durch die Nutzung dünnwandiger NTs in flachen Filmen (40 $\mu$g/cm$^2$ PtNTs mit 25 $\mu$g/cm$^2$ Nafion Ionomer). Darüber hinaus beschreibt die WO 2012/064768 A2 die Verwendung von AgNWs als Elektrokatalysator. Auch die AgNWs werden mit geringem Flächengewicht als flache Schicht auf einer glassy carbon Elektrode abgeschieden und charakterisiert (100 $\mu$g/cm$^2$ AgNWs mit 30 $\mu$g/cm$^2$ Nafion Ionomer). Die erreichten Stromdichten liegen bei etwa 5 mA/cm$^2$ für PtNTs sowie bei etwa 23 mA/cm$^2$ bei AgNWs mit 25 nm Durchmesser.

Die WO 2013/103420 A2 nimmt den Einsatz metallischer NWs und NTs als Elektrokatalysatoren in Brennstoffzellen und Wasserelektrolyseuren vorweg. Auch diese Schrift lehrt den Einsatz dünner NT- und NW-Schichten (40 $\mu$g/cm$^2$ PtNTs bzw., 100 $\mu$g/cm$^2$ AgNWs), die mit Nafion Ionomer auf ionenleitfähigen Substraten gebunden werden. Die Vorteilhaftigkeit trägerloser NWs und NTs in porösen, dünnen Schichten wird heraus gearbeitet. Die dargestellten Präparationstechniken und die erreichten Stromdichten sind mit denen in der WO 2012/064768 A2 offengelegten praktisch identisch.

Die Schriften WO 2007/100811 A2, WO 2012/064768 A2 und WO 2013/103420 A2 zeigen die prinzipielle Vorteilhaftigkeit, die der Einsatz metallischer NTs und NWs als Elektrokatalysatoren bietet. Sie zeigen, dass die hohe spezifische Oberfläche der quasi eindimensionalen NTs und NWs in dünner zweidimensionaler Schicht einen sparsamen Einsatz teurer Katalysatormaterialien ermöglicht. Allerdings erreichen die offenbarten flachen Schichten aus NWs bzw. NTs nur sehr geringe absolute Katalysatorflächen bezogen auf die absolut zur Verfügung stehende Elektroden- bzw. Membranfläche, was sich in wirtschaftlich nicht relevanten Stromdichten niederschlägt. Diese Schriften zeigen also keinen Weg auf, wie wirtschaftlich bedeutende Stoffumsätze bezogen auf die in einem realen Gerät zur Verfügung stehende Elektrodenfläche erreicht werden können.

Im Bereich der elektrochemischen Synthese gibt es zahlreiche Anwendungsgebiete, die in der jüngsten Vergangenheit enorm an Bedeutung gewonnen haben. Treiber für diese Trends sind zum Teil die Veränderungen in der Energielandschaft (regenerative Energien, Dezentralisierung und Privatisierung der Energieerzeugung, Speicherung elektrischer Energie, Elektrifizierung des Individualverkehrs, etc.). Technische Beispiele sind die Wasserelektrolyse, Brennstoffzellen, die elektrochemische $CO_2$-Reduktion und die photoelektrochemische Wasserspaltung. Darüber hinaus gibt es einen immer größeren Bedarf an sauberem Trinkwasser, das ggf. nicht in zentralen Wasserwerken aufbereitet wird, sondern direkt beim Verbraucher hygienisiert werden muss. Selbst in den Industrienationen steigt der Bedarf an der point of use Aufbereitung von Trinkwasser, so dass in den letzten Jahren zahlreiche elektrochemische Verfahren und Apparate zur Trinkwasserhygienisierung entwickelt worden sind. Beispielsweise seien die elektrochemischen Synthesen von Hypochloriger Säure, Ozon und kurzlebiger Sauerstoff- bzw. Hydroxylradikale genannt.

Der Einsatz von AgNWs zur elektrochemischen $CO_2$-Reduktion wird beispielsweise in der Studie von Lu et al. in Nature Communications, 5, 2014, S. 3242ff (DOI:10.1038/ncomms4242) beschrieben. Lu vergleicht die katalytischen Eigenschaften von polykristallinem Silber (Silberfolie) mit denen von nanoporösem Silber (geätzte Silber-Aluminium Legierung), Silbernanopartikeln und AgNWs. Silbernanopartikel und AgNWs wurden in der Studie als dünne, flache Schicht mittels Ionomer (Nafion) auf einer Gasdiffusionsschicht abgeschieden. Die Aufbringungstechnik der flachen Schichten an AgNWs entspricht grundsätzlich der aus der WO2007100811A2 für PtNTs beschriebenen Technik. Die Studie zeigt hohe flächenbezogene Stromdichten von Elektroden aus nanoporösem Silber. Die vergleichsweise niedrigen Stromdichten der flachen AgNW Schichten werden nicht weiter erklärt. Es wird kein Weg zur Verbesserung dieser zweidimensionalen AgNW Schichten aufgezeigt.

Batterien, insbesondere Sekundärzellen, insbesondere Li-Ionenbatterien leiden unter mechanischem Stress bei der Änderung des Ladungszustandes. Zur Erhöhung der mechanischen Stabilität bei gleichzeitiger Verbesserung der elektrischen Leitfähigkeit in einer Halbzelle lehrt die KR 10 2013 055 920 A die Verwendung eines AgNW Netzwerkes. Vorgeschlagen wird ein Laminat aus einer nanopartikulären, elektroaktiven Komponente und einem darauf abgeschiedenen AgNW Netzwerk. Die AgNWs werden auf die vorhandene Nanopartikelstruktur aufgebracht und nachträglich mit dieser verbunden. Kondensatoren werden zur Speicherung elektrischer Energie mit hoher Leistungsdichte hergestellt. In den letzten Jahren wurden Superkondensatoren entwickelt, die die Energie teilweise in Helmholtz Doppelschichten oder in oberflächlich ablaufenden Redoxreaktionen speichern. Als Elektrodenmaterialien kommen heute unterschiedliche Kohlenstoffmodifikationen wie z.B. Aktivkohle, Kohlefaser, CNT zum Einsatz. Die DE 698 32 537 T2 offenbart die Verwendung dreidimensionaler CNT-Elektroden für besonders leistungsstarke elektrochemische Kondensatoren.

Zur Herstellung optisch transparenter, leitfähiger Elektroden in Displays werden seit einiger Zeit vermehrt AgNWs und auch Kupfernanodrähte (Cu-nanowires = CuNWs) eingesetzt. Dabei bilden die auf ein transparentes Substrat aufgebrachten NWs ein perkolierendes, zweidimensionales Netzwerk. Zum Erhalt einer gut elektrisch leitfähigen, quasi zweidimensionalen Schicht müssen die Drähte sorgfältig vom aus der Herstellung der Drähte stammenden Schutzkolloid befreit werden. Dies geschieht üblicherweise durch aufwändige, mehrstufige Waschprozesse. Die gewaschenen, blanken NWs werden dann üblicherweise ohne Zusatz eines elektrisch isolierenden Bindemittels aus verdünnter, meist alkoholischer Dispersion auf das Trägermaterial aufgebracht. Danach wird der elektrische Kontakt der Drähte untereinander meist durch thermische oder mechanische Nachbehandlung der trockenen Schicht hergestellt bzw. verbessert. Dabei werden die flachen Schichten aus NWs durch Walzen oder Tempern verdichtet und die einzelnen Drähte so in innigen Kontakt zueinander gebracht. Alternativ können die einzelnen NWs durch Bestrahlung mit Licht hoher Intensität untereinander verschweißt werden (plasmonic welding). Die lose am Substrat anhaftenden NW Schichten können dann mit Bindemitteln oder Funktionsschichten auf dem Trägermaterial fixiert werden. Alternativ zur binderlosen Beschichtung ist die Entfernung des Bindemittels durch Plasmaätzen oder durch Pyrolyse nach der Beschichtung möglich.

In dem Artikel von Zuofeng Chen et al. in Energy and Environmental Science 7, 2014, S. 1461 ff (DOI: 10.1039/c4ee00211c) sind die Herstellung einer optisch transparenten Schicht aus Kupfer-Platin core-shell NWs sowie deren Verwendung als Elektrokatalysator beschrieben. Chen beschreibt die Herstellung der CuNWs, die Waschprozedur zur Entfernung des Schutzkolloids PVP, die Beschichtung aus verdünnter Dispersion mit Bindemittel, die mechanische Nachbehandlung, die Entfernung des Bindemittels durch Plasmaätzen, die elektrochemische Beschichtung des flachen CuNW Netzwerkes mit Platin und die Untersuchung der elektrokatalytischen Eigenschaften der Schicht in der Wasserstoff erzeugenden Reaktion (hydrogen evolution reaction = HER). Im Vergleich mit einer ebenfalls flach aufgebrachten Schicht aus platiniertem Kohlenstoff (Pt/C) und der nicht platinierten CuNW Schicht wurden mit der platinierten CuNW Schicht die höchsten Stromdichten bei Überspannungen > 0,5 V gemessen. Die erzielten Stromdichten insgesamt blieben allerdings im kommerziell weniger interessanten, unteren einstelligen $mA/cm^2$ Bereich.

Die Nachteile des offenbarten Standes der Technik liegen teilweise in geringen elektrischen und ggf. auch thermischen Leitfähigkeiten elektrokatalytischer Reaktionsschichten begründet. Ferner sind geringe Porositäten bzw. geringe spezifische katalytisch aktive Oberflächen als Nachteil des Standes der Technik zu nennen. Aufwändige Herstellungsverfahren, niedrige Stromdichten bzw. Stoffumsätze pro Flächeneinheit und ineffektive Verwendung teurer Edelmetalle sind als weitere Nachteile des Standes der Technik aufzuführen.

Trotz der aus dem Stand der Technik bekannten Verfahren zur Herstellung metallischer Nanomaterialien bleiben daher Formulierungen, die die Herstellung leitfähiger Schichten aus metallischen Nanomaterialien ermöglichen, ein zentrales Ziel der Forschung und Entwicklung in diesem technischen Gebiet.

**Darstellung der Erfindung**

Aufgabe der vorliegenden Erfindung ist es daher, eine Formulierung für die Herstellung leitfähiger Schichten aus metallischen Nanomaterialien zur Verfügung zu stellen, die die Nachteile des Standes der Technik überwindet. Diese Aufgabe wird erfindungsgemäß durch die Formulierung gemäß unabhängigem Anspruch 1 gelöst. Weitere vorteilhafte Aspekte, Details und Ausgestaltungen der Erfindung ergeben sich aus den abhängigen Ansprüchen, der Beschreibung sowie den Zeichnungen.

Es sollen Materialien bereitgestellt werden, die eine helle leitfähige Beschichtung transparenter und nicht transparenter Substrate, auch von Textilien ermöglichen. Der Begriff Substrat, wie er hier verwendet wird beschreibt Oberflächen, die mit Silbernanodrähten beschichtet werden können. Hierbei kann es sich um starre, oder flexible Oberflächen, sowie glatte, raue oder gekrümmte Oberflächen handeln. Typische Beispiele sind Textilen, Papier, Biopolymer, Holz, Leder, Glas, Folien, Keramiken oder Polymere.

Die vorliegende Erfindung stellt eine metallnanopartikelhaltige, disperse Formulierung zur Herstellung einer leitfähigen Schicht bereit, wobei die Formulierung Metallnanopartikel, Polyvinylpyrrolidon (PVP), zumindest ein die Metallnanopartikel und das Polyvinylpyrrolidon dispergierendes Lösungsmittel und zumindest ein Adsorptiv umfasst, wobei das Adsorptiv ausgewählt ist aus der Gruppe bestehend aus Ammoniak, primäre, sekundäre und tertiäre Amine, und Aminoalkohole, wobei das Adsorptiv, bezogen auf das Gewicht der gesamten Formulierung, in einem Anteil von 0,1 Gew.% bis 5 Gew.% enthalten ist.

Überraschenderweise wurde festgestellt, dass das bei der Metallnanodrahtsynthese eingesetzte PVP zwar den elektrischen Kontakt zwischen den Drähten verhindert und somit als Isolator wirkt, das PVP aber trotzdem zur Herstellung einer transparenten leitfähigen Beschichtung nicht aus der Formulierung entfernt werden muss. Überraschenderweise wurde gefunden, dass durch die Zugabe von Adsorptiven in einem Anteil von 0,1 Gew.% bis 5 Gew.%, wobei die Adsorptive zumindest partiell an die Metallnanodrahtoberfläche adsorbieren, der gewünschte elektrische Kontakt zwischen den Metalldrähten ermöglicht und damit die Ausbildung eines elektrisch leitfähigen Netzwerkes über eine Oberfläche hinweg unterstützt wird.

Eine mögliche Erklärung hierfür ist die Adsorption der Adsorptive an der Metalloberfläche und die dadurch verursachte, zumindest partielle Verdrängung des PVP von der Metalloberfläche, wodurch der Kontakt und folglich die elektrische Leitfähigkeit zwischen sich überkreuzenden Drähten verbessert wird. Die Adsorptive können zu Metallnanodrähten gegeben werden, welche keinem aufwendigen Waschprozess unterzogen wurden, und es werden dennoch hohe Leitfähigkeiten ermöglicht. Untersuchungen zeigen, dass durch den Zusatz der Adsorptive an den Kreuzungspunkten der Metallnanodrähte Verdickungen ausgebildet werden, die den elektrischen Kontakt an den Kreuzungspunkten deutlich verbessern. Diese auf chemischen Weg erzeugten Verdickungen können unter anderem durch Rasterelektronenmikroskopie nachgewiesen werden.

Der Mengenbereich von 0,1 Gew.% bis 5 Gew.% für das Adsorptiv wurde experimentell nachgewiesen, was in den nachfolgende Beispielen noch näher erläutert wird. Insbesondere wurde gezeigt, dass bei Zusatz von mehr als 5 Gew.% Adsorptiv eine komplette Agglomeration der Metallnanopartikel erfolgt, wobei sämtliches stabilisierendes PVP von der Metalloberfläche verdrängt wird. Dadurch wird die nachfolgend gewünschte Quervernetzung des PVP und somit Herstellung einer leitfähigen und gleichzeitig mechanisch stabilen Beschichtung nur unzureichend möglich.

Nach dem Aufbringen auf ein Substrat, beispielsweise einen textilen Träger kommt es nämlich beim Trockenen zu einer chemischen Quervernetzung des Schutzkolloids PVP, wodurch die Herstellung einer leitfähigen, robusten und mechanisch stabilen Beschichtung auf dem Substrat ermöglicht wird. Durch den Nanodrahtcharakter können dünne Schichten auf das Substrat aufgebracht werden, die die ursprüngliche Farbe des Substrats nur geringfügig beeinflussen und beispielsweise auf einem weißen textilen Träger nach dem Beschichtungsprozess eine helle, durchscheinende oder transparente leitfähige Schicht zurücklassen.

Gemäss der Erfindung handelt es sich bei dem Adsorptiv um Ammoniak, primäre, sekundäre und tertiäre Amine, und Aminoalkohole. Diese Adsorptive enthalten funktionelle Gruppen, die eine hohe Affinität zur Metalloberfläche aufweisen. Idealerweise ist die Affinität der funktionellen Gruppe größer als die des PVP, um bereits an der Metalloberfläche adsorbierte PVP Moleküle zumindest partiell von der Oberfläche zu verdrängen.

Bei den Adsorptiven handelt es sich um kleine Moleküle mit niedrigem Molekulargewicht, weshalb die Adsorptive nicht selbst als Isolator auf der Metalloberfläche fungieren. Die Adsorptive weisen daher funktionelle Gruppen in ihrem chemischen Aufbau auf, die eine höhere oder zumindest gleich große Affinität zur Metalloberfläche besitzen wie PVP. Der Begriff Adsorptiv, wie er hier verwendet wird beschreibt folglich Verbindungen mit hoher Affinität zu Metalloberflächen. Überraschenderweise wurde festgestellt, dass der Kontakt zwischen den MetallNanodrähten nicht nur prinzipiell ermöglicht, sondern in besonders hohem Maß verbessert wird. Grund hierfür könnte die Ausbildung frischer metallischer Oberflächen sein. Solche Adsorbat-freien, frischen Oberflächen führen zu extrem niedrigen Übergangswiderständen, die durch ein Zusammenwachsen der Drähte an den Kreuzungspunkten erklärt werden können. Dieses Zusammenwachsen wird mit dem Begriff "chemical welding" bezeichnet. Derartig chemisch verschweißte Nanodrahtnetzwerke bedürfen keiner im Stand der Technik üblichen Nachbehandlung zur Verbesserung der Leifähigkeit wie z.B. thermische Nachbehandlung, UV-Verschweißen, mechanisches Walzen etc.

Aus der Literatur sind die guten Filmbildungseigenschaften und die Quervernetzbarkeit von PVP für die Herstellung farbloser Beschichtungen bekannt (Broschüre BASF, PVP and more..., LUVITEC®, LUVICROSS® and COLLACRAL®VAL). PVP wird von unterschiedlichen Herstellern mit verschiedenen Handelsbezeichnungen geführt, wie etwa Luvitec ® oder Povidone ®. Dem Fachmann ist weiterhin bekannt, dass wässrige PVP Lösungen bei basischen pH Werten (bevorzugt pH > 10) bei erhöhter Temperatur quervernetzen. Die erfindungsgemäßen Adsorptive verdrängen das PVP zumindest teilweise von der Oberfläche und induzieren nach dem Aufbringen beim Aushärten der Schicht bei erhöhter Temperatur ein Vernetzen des PVP, weshalb in Kombination mit den Metallnanodrähten eine klare mechanisch stabile leitfähige Schicht ausgebildet wird. In bevorzugten Ausführungsformen handelt es sich bei den Adsorptiven um Thiole, Amine und Aminoalkohole, besonders bevorzugt um Ethanolamin.

Bevorzugt ist das Adsorptiv, bezogen auf das Gewicht der gesamten Formulierung, in der Formulierung in einem Anteil von 0,5 Gew.% bis 2 Gew.%, bevorzugt in einem Anteil von rund 1,3 Gew.% enthalten.

Bevorzugt weisen die Kohlenwasserstoffreste der als Adsorptive eingesetzten primären, sekundären und tertiären Amine 1, 2, 3, 4, 5, 6, 7, 8, 9 oder 10 Kohlenstoffatome auf, die Carbonsäuren 1, 2, 3, 4, 5, 6, 7, 8, 9, 10, 11, 12, 13, 14, 15, 16, 17 oder 18 Kohlenstoffatome auf. Ebenso bevorzugt weisen die als Adsorptive eingesetzten Carbonsäureester eine Struktur $R_1COOR_2$ auf, wobei der Kohlenwasserstoffrest $R_1$ 1, 2, 3, 4, 5, 6, 7, 8, 9 oder 10 Kohlenstoffatome aufweist und der Kohlenwasserstoffrest $R_2$ 1, 2, 3, 4, 5 oder 6 Kohlenstoffatome aufweist.

Ganz besonders bevorzugt handelt es sich bei dem Adsorptiv um Ethanolamin.

Besonders vorteilhaft sind Ausführungsformen, bei denen Polyvinylpyrrolidon und Metallnanopartikel in einem Gewichtsverhältnis Polyvinylpyrrolidon zu Metallnanopartikel von 0,5 bis 10, bevorzugt in einem Gewichtsverhältnis von 1 bis 5, in der Formulierung enthalten sind.

Gemäß einer besonders bevorzugten Ausführungsform der vorliegenden Erfindung handelt es sich bei den Metallnanopartikeln um Silbernanopartikel. Es soll betont werden, dass der Einsatz von Silbernanopartikeln im Zusammenhang mit sämtlichen anderen Ausführungsformen und Kombinationen solcher Ausführungsformen der vorliegenden Erfindung bevorzugt wird.

Die vorliegende Erfindung betrifft auch ein Verfahren zur Herstellung einer metallnanopartikelhaltigen, dispersen Formulierung umfassend die Schritte

a) Bereitstellen einer aus einem Polyolprozess erhaltenen Mischung, wobei die Mischung zumindest ein Polyol, Polyvinylpyrrolidon und Metallnanopartikel umfasst,
b) Zugabe zumindest eines Adsorptivs, wobei das Adsorptiv ausgewählt ist aus der Gruppe bestehend aus Ammoniak, primäre, sekundäre und tertiäre Amine, und Aminoalkohole, wobei das Adsorptiv, bezogen auf das Gewicht der gesamten Formulierung, in einem Anteil von 0,1 Gew.% bis 5 Gew.% zugegeben wird.

Bevorzugt werden nach Schritt a) und vor Schritt b) die Schritte

a1) Zugabe eines mit dem zumindest einen Polyol im Wesentlichen unmischbaren Lösungsmittels zu der in Schritt a) bereitgestellten Mischung,

a2) Abtrennen des durch Phasentrennung entstandenen Konzentrats an Polyvinylpyrrolidon und Metallnanopartikel,

a3) Zugabe zumindest eines die Metallnanopartikel und das Polyvinylpyrrolidon dispergierenden Lösungsmittels zu dem in Schritt a2) abgetrennten Konzentrat durchgeführt, wobei die Zugabe des zumindest einen Adsorptivs in Schritt b) zu der in Schritt a3) erhaltenen, metallnanopartikelhaltigen, dispersen Formulierung erfolgt.

Metallnanodrähte aus der Polyolsynthese werden zusammen mit dem als Stabilisator verwendeten PVP möglichst quantitativ abgetrennt. Dies wird durch Lösungsmittel, die nicht oder nur schwer mit Polyolen mischbar sind, erreicht. Die Verwendung solcher Lösungsmittel führt zu einer Extraktion der Silbernanodrähte zusammen mit dem PVP. Ein gewünschter Nebeneffekt der Phasentrennung ist, dass unerwünschte Nebenprodukte, wie z.B. Zersetzungsprodukte bzw. nicht umgesetzte Edukte in der polyolhaltigen Phase verbleiben und damit ein effektiver und ausreichender Reinigungsprozess stattfindet. Geeignete Lösungsmittel sind Ketone und Carbonsäureester und Carbonsäuren und Mischungen daraus, wie z.B. Aceton, Essigsäureethylester und Heptansäure.

Die Herstellung einer leitfähigen, hellen Schicht auf einem Substrat beinhaltet in einer bevorzugten Ausführungsform der Erfindung folgende Einzelschritte:

- Herstellung Metallnanodrähte in einem Polyolprozess, beispielsweise gemäß DE102010017706B4.
- Ausfällen der Metallnanodrähte und des gesamten bei der Herstellung eingesetzten PVP durch Phasentrennung oder Sedimentation, um ein Konzentrat an Metallnanodrähten mit PVP zu erhalten.
- Verdünnung des Konzentrats mit Lösungsmittel, bevorzugt Wasser oder Alkohol auf einen Gewichtsanteil zwischen 0,1 bis 2 % Metall.
- Zusatz des Adsorptivs in einem Gewichtsanteil zwischen 0,1 und 5 %.
- Gegebenenfalls Zusatz von weiteren Additiven wie Tensiden, Bindern, Verdickern und Quervernetzern.
- Aufbringen der Mischung auf ein Substrat, in bevorzugten Ausführungsformen auf einen textilen Träger, Papier, Karton oder Holz.
- Aushärten der Schicht durch Evaporieren des Lösungsmittels, gegebenenfalls thermische Aushärtung zur Aktivierung des Quervernetzers.

Auf diese Weise beschichtete Substrate weisen je nach Metallanteil auf dem Substrat, Anteil an Adsorptiv und Aufbringmethode Leitfähigkeiten im Bereich von 1 Ohm/sq. bis 500 Ohm/sq. auf. Bei geringen Silberanteilen können auch Leitfähigkeiten im ableitfähigen Bereich ($10^4$ bis $10^7$ Ohm/sq.) erzielt werden. Das Aufbringen der erfindungsgemäßen Formulierung kann mit der vollen Bandbreite an gängigen Beschichtungsmethoden erfolgen. Bevorzugte Aufbringmethoden sind Aufsprühen, Tauchen, dip- and- squeeze- Methoden, Aufbringen mit einem Foulard, Aufbringen mit Rakeltechnik oder Schlitzdüse- Beschichtung, Schaumbeschichtung, Aufbringen durch Transferdruck, Aufbringung in Avivagebädern, sowie strukturiertes Aufbringen mittels Siebdruck, Tiefdruck, Tampondruck oder Inkjetdruck. Um die Saugfähigkeit des Substrats zu erniedrigen oder die Oberflächenrauigkeit zu erniedrigen und somit den Silbergehalt zu minimieren werden in einigen Ausführungsformen vorbeschichtete Substrate, insbesondere vorbeschichtete Textilen verwendet.

Die Phasentrennung wird in einigen bevorzugten Ausführungsformen durch den Zusatz von Lösungsmitteln und Lösungsmittelgemischen (z.B. Aceton und Essigsäureethylester) erzielt, nach dem Abdekantieren der oberen Phase verbleibt ein Konzentrat mit einem Gewichtsanteil an Silber von ca. 3 %.

Bei bevorzugten Ausführungsformen der erfindungsgemäßen Formulierung kommen Adsorptive zum Einsatz, die nach Zugabe einen pH Wert in der Formulierung zwischen pH 8 und pH 12 einstellen und zugleich eine hohe Affinität zur Metalloberfläche aufweisen. In bevorzugten Ausführungsformen handelt es sich bei den Adsorptiven um Amine und Aminoalkohole, besonders bevorzugt um Ethanolamin. Erfindungsgemäß werden die Adsorptive in einem Gewichtsanteil zwischen 0,1% bis 5%, bevorzugt 0,5 bis 2 % zugesetzt.

Bei bevorzugten Ausführungsformen der Erfindung handelt es sich bei dem Substrat um einen textilen Träger, insbesondere natürliche synthetische textile Fasern, linienförmige textile Gebilde wie Garne und Zwirne, flächenförmige textile Gebilde wie Gewebe, Gewirke, Gestricke, Geflechte, Nähgewirke, Vliesstoffe und Filze, sowie räumliche textile Gebilde wie Schläuche und textile Halbzeuge.

Zur Herstellung der erfindungsgemäßen Formulierung sind Lösungsmittel geeignet, in denen Metallnanodrähte und PVP dispergierbar sind. Lösungsmittel, in denen PVP nicht löslich ist, sind nicht geeignet. In bevorzugten Ausführungsformen werden als Lösungsmittel Wasser und Alkohole verwendet, besonders bevorzugt Wasser und 2-Propanol und Mischungen davon.

Bevorzugte Ausführungsformen der Erfindung beinhalten in der Formulierung ein Gewichtsverhältnis von PVP/Metall von größer als 1 und kleiner als 5, bevorzugt größer als 2 und kleiner als 3, besonders bevorzugt 2,8. Ferner kommt bevorzugt PVP K30, PVP K60, oder PVP K90 zum Einsatz.

Der K-Wert stellt dabei eine in der Kunststoffindustrie übliche Klassifikation dar und steht in direktem Zusammenhang mit der mittleren molaren Masse des Polymers. Damit lässt sich aus dem K-Wert indirekt auf den Grad der Polymerisation und damit die Kettenlänge schließen, die nach folgender Formel, die als Fikentscher-Gleichung bekannt ist, berechnet werden kann:

$$K = 1000 \cdot k = 1000 \cdot \frac{1{,}5 \lg \eta_r - 1 \pm \sqrt{1 + (\frac{2}{c} + 2 + 1{,}5 \lg \eta_r) \cdot 1{,}5 \lg \eta_r}}{150 + 300c}$$

mit: $\eta_r$ = relative Viskosität (dynamische Viskosität der Lösung/dynamische Viskosität des Lösungsmittel) und $c$ = Massenkonzentration an Polymer in der Lösung in g/cm$^3$.

Das optimale Verhältnis PVP/Metall hängt von der Länge und der Dicke der Metallnanodrähte, also der Metalloberfläche (je Gramm Metall) ab. Die angegebenen bevorzugten Werte sind für Metallnanodrähte mit einer Dicke zwischen 30-60nm und einer Länge zischen 7-30 $\mu$m ermittelt. Bei gleichbleibender Länge ist das Verhältnis PVP/Metall für dickere Drähte zu kleineren Werten und für dünnere Drähte zu größeren Werten hin verschoben. Einfach ausgedrückt: je kleiner die Metallpartikel, desto größer die vorhandene Oberfläche je Gramm Metall, und desto mehr PVP ist zur Stabilisierung nötig. Je nach Länge und Dicke der Nanodrähte variiert folglich das optimale Verhältnis PVP/Metall und soll für andere Abmessungen nicht auf die angegebenen Werte beschränkt sein.

In einigen Ausführungsformen sind der Formulierung zusätzliche Additive zugesetzt. In bevorzugten Ausführungsformen handelt es sich bei den Additiven um Tenside, Binder, Verdicker und Quervernetzer. Bevorzugt kommen nichtionische Tenside zum Einsatz, besonders bevorzugt Trition X-100. Bezüglich des Binders werden in einigen Ausführungsformen Binder auf Basis von Polyurethan und/oder Polyester, besonders bevorzugt aliphatische Polyurethan Polyesterbinder eingesetzt, gegebenenfalls in Kombination mit einem Quervernetzer, bevorzugt mit Aziridin basierten Quervernetzern. In einigen speziellen Ausführungsformen werden Binder auf Basis der Sol-Gel Chemie verwendet. Außerdem werden in einigen Ausführungsformen der Formulierung Verdicker zugesetzt, insbesondere Cellulose oder Acrylat basierte Verdicker.

Das Evaporieren des Lösungsmittels erfolgt durch Trocknen lassen bei Raumtemperatur oder durch Erwärmen, bevorzugt in einem Temperaturbereich zwischen 100-160 °C, besonders bevorzugt in einem Temperaturbereich zwischen 140-150°C.

Die vorliegende Erfindung umfasst die Verwendung der leitfähigen Schichten zum Heizen Oberflächen, im Besonderen zum Heizen von textilen Substraten.

Die vorliegende Erfindung umfasst auch die Verwendung der leitfähigen Formulierung zur Reflektion von elektromagnetischer Strahlung in jedem beliebigen Wellenlängenbereich. Im Besonderen liegen die Anwendungen dabei im Bereich der Infrarot-Reflektion bei einem Wellenlängenbereich von 0,8 bis 1000 $\mu$m. Anwendungen liegen dabei in der Reflektion von Wärmestrahlung im bauphysikalischen Bereich, bekannt als "low emmissivity" (low E), ebenso wie auch im Bereich von Bekleidungssubstraten, die im Besonderen im militärischen Bereich genutzt werden. Im militärischen Bereich spielt Tarnung oder Camouflage eine herausragende Rolle, deren benötigte Eigenschaften zur Abschirmung von Infraroter, und wichtiger noch Radarstrahlung mit einer Wellenlänge größer als 1000 $\mu$m, durch die erfindungsgemäßen Formulierungen realisiert werden können.

Die erfindungsgemäße Formulierung kann grundsätzlich auf unterschiedlichste Substrate wir Glas, Folie oder Textilien aufgebracht werden und zur Reflexion elektromagnetischer Strahlung eingesetzt werden. Ja nach nachdem, welche Leitfähigkeit auf dem Substrat eingestellt wird, bzw. wie groß die Silbermenge und wie engmaschig das entstehende perkolierende Netzwerk ist, kann die leitfähige Formulierung zur Reflexion von elektromagnetischer Strahlung in jedem beliebigen Wellenlängenbereich verwendet werden. Anwendungen liegen hierbei im Wellenlängenbereich von 0,8 $\mu$m bis 1.000 $\mu$m. Beispielsweise kann ein hoher Grad an Reflexion im Wellenlängenbereich von 3 $\mu$m bis 50 $\mu$m, insbesondere im Bereich des Maximums der Wärmestrahlung bei Raumtemperatur (10 $\mu$m) erreicht werden. Hierbei handelt es sich um den den Fachmann als low e bekannten Wellenlängenbereich. Anwendungen liegen hierbei beispielsweise in der Reflexion von Wärmestrahlung im Baubereich wie textiler Architektur, aber auch bei textilen Substraten, die im militärischen Bereich genutzt werden können.

Des Weiteren können mit der erfindungsgemäßen Formulierung beschichtete Substrate zur Abschirmung von Infrarot und Radarstrahlung verwendet werden. In militärischen Bereich spielt Tarnung oder Camouflage eine herausragende Rolle, deren benötigte Eigenschaften zur Abschirmung von Infraroter, und wichtiger noch Radarstrahlung mit einer Wellenlänge größer als 1.000 $\mu$m, durch die erfindungsgemäßen Formulierungen realisiert werden können.

Die vorliegende Erfindung umfasst auch die Verwendung der leitfähigen Formulierungen als Antistatik-Ausrüstung. Im Besonderen können damit textile Substrate gleichzeitig ableitfähig und hydrophob (bzw. schmutzabweisend) ausgerüstet werden. Im Besonderen können transparente Polymere, wie Polycarbonat mit der erfindungsgemäßen Formulierung elektrisch-ableitfähig und damit anti-statisch beschichtet werden.

Die vorliegende Erfindung umfasst auch die Verwendung der leitfähigen Formulierung zur Herstellung unsichtbarer, elektrischer Leiterbahnen auf einem Substrat. Im Besonderen können damit Leiterbahnen im automobilen Innenbereich realisiert werden, die die Aufgabe des Stromtransports von Schaltimpulsen oder (biometrischen) Sensordaten übernehmen. Die erfindungsgemäßen Formulierungen können zu diesem Zweck auf die Auto-Innenraum üblichen Substrate wie Sitztextilien- und leder, Armaturenbezüge oder Lenkräder aufgebracht werden.

Die vorliegende Erfindung betrifft auch ein Verfahren zur Herstellung einer leitfähigen Schicht umfassend die Schritte

a) Bereitstellen einer metallnanopartikelhaltigen, dispersen Formulierung, wobei die Formulierung Metallnanopartikel, Polyvinylpyrrolidon, zumindest ein die Metallnanopartikel und das Polyvinylpyrrolidon dispergierendes Lösungsmittel und zumindest ein Adsorptiv umfasst, wobei das Adsorptiv ausgewählt ist aus der Gruppe bestehend aus Ammoniak, primäre, sekundäre und tertiäre Amine, und Aminoalkohole, wobei das Adsorptiv, bezogen auf das Gewicht der gesamten Formulierung, in der metallnanopartikelhaltigen, dispersen Formulierung in einem Anteil von 0,1 Gew.% bis 5 Gew.% enthalten ist,
b) Trocknen der metallnanopartikelhaltigen, dispersen Formulierung derart, dass das die Metallnanopartikel und das Polyvinylpyrrolidon dispergierende Lösungsmittel im Wesentlichen vollständig entfernt wird.

Es entstehen dreidimensional verbrückte elektrisch leitfähige metallische Gerüststrukturen, die zumindest teilweise aus metallischen Nanodrähten (NWs) bzw. Nanotubes (NTs) bestehen. Es handelt sich um dreidimensionale, binderstabilisierte NW-/NT-Netzwerke. Die Verbrückung der Struktur wird durch auf der Metalloberfläche adsorbiertes PVP bewirkt.

Die vorliegende Erfindung betrifft außerdem leitfähige Schicht, die durch das Verfahren umfassend die Schritte

a) Bereitstellen einer metallnanopartikelhaltigen, dispersen Formulierung, wobei die Formulierung Metallnanopartikel, Polyvinylpyrrolidon, zumindest ein die Metallnanopartikel und das Polyvinylpyrrolidon dispergierendes Lösungsmittel und zumindest ein Adsorptiv umfasst, wobei das Adsorptiv ausgewählt ist aus der Gruppe bestehend aus Ammoniak, primäre, sekundäre und tertiäre Amine, und Aminoalkohole, wobei das Adsorptiv, bezogen auf das Gewicht der gesamten Formulierung, in der metallnanopartikelhaltigen, dispersen Formulierung in einem Anteil von 0,1 Gew.% bis 5 Gew.% enthalten ist,
b) Trocknen der metallnanopartikelhaltigen, dispersen Formulierung derart, dass das die Metallnanopartikel und das Polyvinylpyrrolidon dispergierende Lösungsmittel im Wesentlichen vollständig entfernt wird

herstellbar sind.

Bevorzugte Ausführungsformen der Erfindung enthalten vernetztes Polyvinylpyrrolidon (PVP), sogenanntes Polyvinylpolypyrrolidon (PVPP) bzw. andere Reaktionsprodukte von PVP als Binder.

Typische Ausführungsformen der Erfindung beinhalten in den erfindungsgemäßen Strukturen ein Gewichtsverhältnis von PVPP/Metall von größer als 0,5 und kleiner als 10, bevorzugt größer als 1 und kleiner als 5, besonders bevorzugt ist ein Verhältnis zwischen 2 und 3. Dabei wird Polyvinylpyrrolidon mit einem K-Wert zwischen K17 und K115 verwendet, bevorzugt sind K Werte zwischen K 30 und K 120, besonders bevorzugt sind PVP K30, PVP K60, oder PVP K90.

Das ideale Verhältnis PVP/Metall hängt immer auch von der Geometrie der NWs/NTs ab. Dünnere Nanometalle besitzen größere spezifische Oberfläche als dickere. Deshalb ist das ideale PVP/Metall Verhältnis bei dünneren NWs/NTs größer als bei dickeren. Selbstverständlich bezieht sich diese Tendenz auf gleiche PVP-Metall Paarungen.

Das PVP erlaubt die Ausbildung der Nanometallgerüststruktur in der flüssigen Phase. Durch den Zusatz von Vernetzern und ggf. die Einstellung geeigneter physikalisch chemischer Bedingungen kommt es zur Fixierung der Struktur durch Vernetzung bzw. Polymerisation oder auch Agglomeration des PVPs.

Die Ausbildung der Gerüststruktur ist besonders einfach bei adsorbiertem PVP. Die Vernetzer verdrängen zumindest teilweise das PVP von der Metalloberfläche und vernetzen das PVP untereinander. Es kommt zur Ausbildung der Verbrückungen bei gleichzeitig gutem metallischem Kontakt der NWs/NTs untereinander. An den metallischen Berührungspunkten kann es zum chemischen Verschweißen der Strukturen kommen.

Weitere Ausführungsformen der Erfindung bestehen aus binderlosen dreidimensionalen NW-/NT-Netzwerken.

Die NWs/NTs der erfindungsgemäßen Strukturen bestehen aus Metallen bzw. deren Legierungen. Bevorzugt verwendete Metalle sind Ag, Cu, Pt, Au, Pd, Ni, Co, Rh, Ir, Ru. Bestimmte Ausführungsformen der Erfindung bestehen aus Nanodrähten/Nanotubes (NWs/NTs) mit übereinander liegenden Schichten aus verschiedenen Metallen. Oberflächlich können die Strukturen zumindest teilweise aus Metallverbindungen wie z.B. Metalloxiden bestehen.

Weitere bevorzugte Ausführungsformen der Erfindung besitzen in den Hohlräumen der Struktur eingelagerte Substanzen wie z.B. nano- bis mikropartikuläre Katalysatoren.

Der Begriff "Nanodraht" (nanowire = NW), wie er hier verwendet wird beschreibt Strukturen, die in zumindest zwei Raumrichtungen ähnliche Ausdehnungen im Bereich von 1 nm bis 1000 nm aufweisen und in der dritten Raumrichtung eine Ausdehnung von zumindest dem 5-fachen der beiden anderen Ausdehnungen besitzen.

Bevorzugte Ausführungsformen der Erfindung bestehen zumindest überwiegend aus Silbernanodrähten (AgNWs). Weitere bevorzugte Ausführungsformen der Erfindung bestehen zumindest überwiegend aus Kupfernanodrähten (CuNWs). Weitere bevorzugte Ausführungsformen der Erfindung bestehen zumindest überwiegend aus Platinnanodrähten (PtNWs). Weitere bevorzugte Ausführungsformen der Erfindung bestehen zumindest überwiegend aus Goldnanodrähten (AuNWs). Weitere bevorzugte Ausführungsformen der Erfindung bestehen zumindest überwiegend aus Nickelnanodrähten (NiNWs). Weitere bevorzugte Ausführungsformen der Erfindung bestehen zumindest überwiegend aus Kobaltnanodrähten (CoNWs).

Bevorzugte Ausführungsformen der Erfindung bestehen zumindest teilweise aus Platin beschichteten AgNWs (PtAgNWs). Weitere bevorzugte Ausführungsformen der Erfindung bestehen zumindest teilweise aus Platin beschichteten CuNWs (PtCuNWs). Weitere bevorzugte Ausführungsformen der Erfindung bestehen zumindest teilweise aus Palladium beschichteten AgNWs (PdAgNWs). Weitere bevorzugte Ausführungsformen der Erfindung bestehen zumindest teilweise aus Palladium beschichteten CuNWs (PdCuNWs). Weitere bevorzugte Ausführungsformen der Erfindung bestehen zumindest teilweise aus Kobalt beschichteten AgNWs (CoAgNWs). Weitere bevorzugte Ausführungsformen der Erfindung bestehen zumindest teilweise aus Kobalt beschichteten CuNWs (CoCuNWs). Weitere bevorzugte Ausführungsformen der Erfindung bestehen zumindest teilweise aus Nickel beschichteten AgNWs (NiAgNWs). Weitere bevorzugte Ausführungsformen der Erfindung bestehen zumindest teilweise aus Nickel beschichteten CuNWs (NiCuNWs).

Der Begriff "Nanoröhrchen" (nanotube = NT), wie er hier verwendet wird beschreibt Strukturen, die in zumindest zwei Raumrichtungen ähnliche Ausdehnungen im Bereich von 1 nm bis 1000 nm aufweisen und in der dritten Raumrichtung eine Ausdehnung von zumindest dem 5-fachen der beiden anderen Ausdehnungen besitzen und zumindest überwiegend hohl sind.

Bevorzugte Ausführungsformen der Erfindung bestehen zumindest teilweise aus Platinnanotubes (PtNTs). Weitere bevorzugte Ausführungsformen der Erfindung bestehen zumindest teilweise aus Goldnanotubes (AuNTs). Weitere bevorzugte Ausführungsformen der Erfindung bestehen zumindest teilweise aus Palladiumnanotubes (PdNTs).

Die NWs/NTs liegen in den erfindungsgemäßen Gerüststrukturen weitgehend ungeordnet vor. Bevorzugte Strukturen erinnern in ihrer Morphologie an textile Filze.

Bevorzugte Ausführungsformen der Erfindung weisen eine Schichtdicke von wenigstens 0,5 $\mu$m, bevorzugt von wenigstens 2 $\mu$m besonders bevorzugt von wenigstens 10 $\mu$m und am meisten bevorzugt von wenigstens 30 $\mu$m auf.

Die erfindungsgemäßen Gerüststrukturen sind mechanisch überraschend stabil. Durch ihren guten dreidimensionalen Zusammenhalt und die Fixierung der einzelnen NWs/NTs untereinander an deren Berührungspunkten, lassen sich einzelne NWs/NTs kaum aus der Nanometallstruktur herauslösen. Durch bestimmte Herstellungsverfahren oder auch Behandlungsmethoden können Stapel aus erfindungsgemäßen Strukturen erzeugt werden. Z.B. bei Biegebruchbelastungen oder beim raschen Gefriertrocknen kommt es teilweise zum Auftrennen der homogenen Struktur in einzelne in sich zusammenhängende Schichten (Zwiebel- bzw. Blätterstruktur).

Die erfindungsgemäßen Nanometallstrukturen sind elektrisch leitfähig. Bevorzugte Ausführungsformen der Erfindung zeigen in alle drei Raumrichtungen elektrische Leitfähigkeit von mindestens 10 S/m, bevorzugt von mindestens 50 S/m, besonders bevorzugt von mindestens 100 S/m und am meisten bevorzugt von mindestens 500 S/m.

Die erfindungsgemäßen Nanometallstrukturen weisen einen geringen Volumenanteil an Metall auf. Der Metallvolumenanteil in den Gerüststrukturen beträgt maximal 20 %, bevorzugt maximal 15 %, besonders bevorzugt maximal 10 % und am meisten bevorzugt von maximal 5 % auf. Dabei zeigen die Nanometallstrukturen eine besonders geringe Mikroporosität (< 2nm) bei gleichzeitig hoher Meso- (2-50 nm) und teilweise auch Makroporosität (> 50 nm).

Die leitfähigen Schichten sind bereits für sich im makroskopischen Bereich mechanisch stabil, d.h. dass sie in flüssigen oder gasförmigen Medien trotz ihrer hohen Porosität unter ihrem Eigengewicht nicht zerfallen. Sehr dünne Schichten sind lediglich auf festen Trägern mechanisch so stabil, dass sie in flüssigen oder gasförmigen Medien nicht zerfallen.

Besondere Ausführungsformen der Erfindung sind mit katalytisch aktiven Materialien beladen. Diese Beladung kann im einfachsten Fall ein homogener, weitgehend geschlossener Überzug mit einem für die beabsichtigte Anwendung katalytisch aktiven Material sein. Zur Illustration seien hochporöse, dreidimensionale Netzwerke aus PtAgNWs, PtCuNWs, NiAgNWs, NiCuNWs, CoAgNWs, CoCuNWs, IrAgNWs, IrCuNWs, IrNiNWs oder IrCoNWs genannt. Die Verteilung der katalytisch aktiven Materialien auf der dreidimensionalen Nanometallstruktur kann auch punktuell und/oder heterogen sein. Zur Illustration seien die Verteilung von Platin Nanopartikeln (PtNP) auf einem dreidimensionalen AgNW Netzwerk bzw. vereinzelte Platinmetall Inseln auf einem AgNW Netzwerk genannt. Eine Mischung verschiedener Materialien und Verteilungen kann sich in bestimmten Ausführungen der Erfindung besonders positiv auswirken. Bei den katalytisch aktiven Materialien muss es sich nicht notwendigerweise um reine Metalle handeln. Bestimmte Ausführungsformen der Erfindung tragen katalytisch aktive Materialien aus der Gruppe der Metalloxide.

Besondere Ausführungsformen der erfindungsgemäßen Gerüststrukturen sind bevorzugt flach ausgeprägt, d.h. dass die Strukturen bei gegebener Schichtdicke im o.g. Bereich in den anderen Raumrichtungen zumindest im mm Bereich ausgedehnt sind. Bevorzugt sind Ausführungen mit Ausdehnungen > 1 mm, besonders bevorzugt > 10 mm und am meisten bevorzugt > 50 mm.

Bevorzugte Ausführungsformen der Erfindung setzen auf NWs auf, die nach dem sogenannten Polyolverfahren hergestellt wurden. Die DE 10 2010 017 706 B4 offenbart beispielsweise ein einfaches und besonders wirtschaftliches Verfahren zur Herstellung von AgNWs.

Nach der Polyolsynthese sind die NWs mit einer dichten, elektrisch isolierenden Schicht PVP überzogen. Zur Herstellung transparenter, elektrisch hoch leitfähiger Schichten aus diesen NWs muss die PVP-Hülle nach dem Stand der Technik durch Waschprozesse entfernt oder in einer mechanischen, chemischen oder thermischen Nachbehandlung zerstört oder zumindest durchbrochen werden.

Es wurde überraschenderweise festgestellt, dass das bei der Metall-NW Synthese eingesetzte PVP zwar den elektrischen Kontakt zwischen den NWs verhindert und als Isolator wirkt, aber trotzdem zur Herstellung einer leitfähigen Struktur nicht aus der Formulierung entfernt werden muss. Überraschenderweise wurde gefunden, dass die Zugabe von bestimmten Adsorptiven, die zumindest partiell an der NW Oberfläche adsorbieren einen gewünschten, elektrischen Kontakt zwischen den NWs ermöglichen und damit die Ausbildung eines elektrisch leitfähigen Netzwerkes unterstützen. Eine mögliche Erklärung hierfür ist, dass die Adsorptive an der Metalloberfläche adsorbieren und PVP zumindest partiell von der Oberfläche verdrängen und somit den Kontakt und folglich die elektrische Leitfähigkeit zwischen sich überkreuzenden NWs verbessern. Diese chemischen Komponenten können zu NWs gegeben werden, die keinem aufwendigen Waschprozess unterzogen wurden und dennoch hohe Leitfähigkeiten ermöglichen.

Aus der Literatur sind die guten Filmbildungseigenschaften und die Quervernetzbarkeit von PVP für die Herstellung farbloser Beschichtungen bekannt. Dem Fachmann ist weiterhin bekannt, dass wässrige PVP Lösungen bei basischen pH Werten (bevorzugt > pH 10) bei erhöhter Temperatur zu PVPP quervernetzen. In einigen besonders bevorzugten Synthesen zur Herstellung der Erfindung kommen nun Adsorptive zum Einsatz, die PVP zumindest teilweise von der Oberfläche verdrängen und ggf. bei erhöhter Temperatur ein Vernetzen von PVP induzieren und in Kombination mit PVP und metallischen NWs/NTs mechanisch stabile leitfähige Strukturen ausbilden. In bevorzugten Ausführungsformen der Synthesen handelt es sich bei dem Adsorptiv um Ethanolamin.

Besonders bevorzugte Ausführungsformen umfassen die Abtrennung der NWs/NTs zusammen mit dem als Stabilisator verwendeten PVP von der Polyolprozess Syntheselösung. Das wird bevorzugt durch eine Extraktion von NWs/NTs und PVP in einem mit Polyolen nur schwer mischbaren Lösungsmittel erreicht. Ein gewünschter Nebeneffekt der Phasentrennung ist, dass unerwünschte Nebenprodukte, wie z.B. Zersetzungsprodukte bzw. nicht umgesetzte Edukte in der Polyol haltigen Phase verbleiben und damit ein effektiver Reinigungsprozess stattfindet. Geeignete Lösungsmittel sind Ketone und Carbonsäureester und Carbonsäuren und Mischungen daraus, wie z.B. Aceton, Essigsäureethylester und Heptansäure.

Besonders bevorzugte Synthesewege umfassen zumindest folgende Einzelschritte:

- Herstellung NWs unter Zusatz von PVP in einem Polyolprozess, beispielsweise gemäß DE 10 2010 017 706 B4, wobei das Gewichtsverhältnis zwischen PVP und Metall bevorzugt im Bereich von 0,5 bis 10, besonders bevorzugt 1 bis 5 liegt.
- Ausfällen der NWs und des gesamten bei der Herstellung eingesetzten PVPs aus der Polyol Syntheselösung durch Phasentrennung oder Sedimentation, um ein Konzentrat an NWs mit PVP zu erhalten.
- Verdünnung des Konzentrats mit Lösungsmittel, bevorzugt Wasser oder Alkohol auf einen Gewichtsanteil zwischen 0,01 und 5 Gew.- % Metall.
- Zusatz von auf der Metalloberfläche adsorbierenden und PVP vernetzenden bzw. umsetzenden Adsorptiven bevorzugt in einem Gewichtsanteil zwischen 0,1 und 5 % ggf. bei erhöhter Temperatur
- Gegebenenfalls Zusatz von weiteren Additiven wie Katalysatoren, Tensiden, Bindern, Verdickern und Quervernetzern.
- Erhitzen der Dispersion, ggf. nach der Beschichtung auf einen geeigneten Träger wie z.B. einer ionenleitfähigen Membran.

Die Reihenfolge der Einzelschritte kann sinnvoll variiert werden. Insbesondere kann der Zusatz von Vernetzern nach der Beschichtung erfolgen.

Die Herstellung der erfindungsgemäßen Nanometallstrukturen kann auch auf Basis gewaschener, also weitgehend PVP freier NWs/NTs erfolgen. Genauso können metallische NWs/NTs zur Herstellung der Gerüststrukturen verwendet werden, die von einem nicht vernetzbaren PVP ummantelt sind. In beiden Fällen wird in einem vorbereitenden Schritt die NW-/NT-Dispersion mit PVP vorbehandelt, so dass die oben beschriebenen Bedingungen zur Ausbildung und Fixierung der Gerüststrukturen erfüllt sind. Ein geeignetes Herstellungsverfahren lässt sich so beschreiben:

- Zugabe von PVP zu NW-/NT-Dispersion unter Bedingungen, bei denen das PVP zumindest teilweise auf die Metalloberfläche adsorbiert, wobei das Gewichtsverhältnis zwischen PVP und Metall bevorzugt im Bereich von 0,5 bis 10 liegt.

- Ggf. Ausfällen der NWs und des gesamten zugesetzten PVPs durch Phasentrennung oder Sedimentation, um ein Konzentrat an NWs mit PVP zu erhalten.
- Ggf. Verdünnung des Konzentrats mit Lösungsmittel, bevorzugt Wasser oder Alkohol auf einen Gewichtsanteil zwischen 0,01 und 5 Gew.- % Metall
- Zusatz von auf der Metalloberfläche adsorbierenden und PVP vernetzenden bzw. umsetzenden Adsorptiven bevorzugt in einem Gewichtsanteil zwischen 0,1 und 5 % ggf. bei erhöhter Temperatur
- Gegebenenfalls Zusatz von weiteren Additiven wie Katalysatoren, Tensiden, Bindern, Verdickern und Quervernetzern.
- Erhitzen der Dispersion, ggf. nach der Beschichtung auf einen geeigneten Träger wie z.B. einer ionenleitfähigen Membran.

Verallgemeinert und zusammengefasst umfasst ein besonders bevorzugter Syntheseweg für die erfindungsgemäßen, elektrisch hoch leitfähigen Metallgerüststrukturen zumindest folgende Schritte:

- Vorlage einer NW-/NT-Dispersion mit zumindest teilweise auf der Metalloberfläche adsorbiertem PVP, wobei das Gewichtsverhältnis zwischen PVP und Metall bevorzugt im Bereich von 0,5 bis 10 liegt und der Gewichtsanteil Metall in der Dispersion zwischen 0,01 und 5 Gew.- % beträgt,
- Zusatz von auf der Metalloberfläche adsorbierenden und PVP vernetzenden bzw. umsetzenden Adsorptiv, bevorzugt in einem Gewichtsanteil zwischen 0,1 und 5 % ggf. bei erhöhter Temperatur.

Es wurde festgestellt, dass der Zusatz der oben aufgeführten Adsorptive zur Ausbildung binderloser Nanometallnetzwerke geeignet ist.

Die Herstellung der Strukturen kann so geführt werden, dass die Verbindung zwischen den metallischen NWs/NTs ebenfalls metallisch ist. Bei hohen pH Werten und ggf. erhöhten Temperaturen scheidet sich Metall an den Kreuzungspunkten verschiedener NWs/NTs ab, wodurch Netzwerke mechanisch stabilisiert und gleichzeitig elektrisch leitfähig gemacht werden. Die NWs/NTs werden chemisch verschweißt.

Die nach einem der beschriebenen Verfahren hergestellten Nanometallstrukturen werden üblicherweise durch Waschen mit einem geeigneten Lösungsmittel wie z.B. Wasser oder Alkohol von Chemikalienresten befreit. Je nach Verwendung können die gereinigten Strukturen nass oder trocken weiter verarbeitet werden. Zur Trocknung eignen sich die üblichen Verfahren des Standes der Technik. Insbesondere eignen sich langsames Überströmen mit trockenen Gasen (je nach Metall Luft oder Inertgas) bei erhöhten Temperaturen und Gefriertrocknen.

Wie bereits dargestellt, tragen die Nanometallstrukturen bevorzugter Ausführungsformen der Erfindung besondere katalytisch aktive Materialien. Diese katalytisch aktiven Materialien können prinzipiell vor, während oder nach der Strukturherstellung auf die NWs bzw. NTs aufgebracht werden.

In bevorzugten Verfahren werden die durch PVP-Vernetzung bzw. durch chemisches Verschweißen erzeugten und ggf. gewaschenen Nanometallstrukturen mit Katalysatormetallbeschichtungen versehen. Diese Beschichtungen erfolgen bevorzugt nasschemisch. Edlere Katalysatormetallschichten lassen sich auf unedleren NWs oder NTs direkt durch Zugabe von Edelmetallsalzlösungen abscheiden. Beispiele sind Platin- oder Palladiumschichten auf AgNW- oder CuNW-Netzwerken. Wird mehr Edelmetallsalz eingesetzt, sind binderlose, reine Pt-NT, Au-NT bzw. Pd-NT-Netzwerke zugänglich. Die unedlen Strukturen lösen sich im Inneren der sich abscheidenden edleren Strukturen auf. Durch Anlegen einer elektrischen Spannung, durch Zugabe von Reduktionsmitteln wie z.B. Hydrazin oder durch geschickte Wahl anderer, die Reihenfolge der elektrochemischen Spannungsreihe beeinflussender Additive wie z.B. Komplexbildner können unedlere Metallschichten auf edleren Metallstrukturen abgeschieden werden. Beispiele hierfür sind Nickel- oder Cobaltschichten auf AgNW- oder CuNW-Netzwerken.

Weitere bevorzugte Verfahren machen nicht durchgängige Oberflächenbeschichtungen der Nanometallstrukturen zugänglich. Im Rahmen dieser Schrift werden sie als Dotierungen bezeichnet. Neben den bereits zur nasschemischen Beschichtung vorgestellten Verfahren eignen sich zahlreiche weitere Verfahren zur Erzeugung von Dotierungen.

Die gerade zur Erzeugung katalytisch aktiver Oberflächen beschriebenen Verfahren eignen sich natürlich genauso zur Herstellung katalytisch aktivierter NWs/NTs, die dann zur Herstellung der Gerüststrukturen eingesetzt werden können.

In besonders bevorzugten Ausführungsformen der Erfindung erfolgt die katalytische Beschichtung der Oberflächen während der Ausbildung der Gerüststruktur. Damit sind besonders stabile, elektrisch hoch leitfähige Strukturen zugänglich. Beispiele hierfür sind Nickel- oder Cobaltschichten auf AgNW- oder CuNW-Netzwerken, die durch Zusatz der jeweiligen Metallsalze und entsprechender Reduktionsmittel entstehen. Ein weiterer, bevorzugter Herstellungsprozess für die erfindungsgemäßen Gerüststrukturen kann damit wie folgt beschrieben werden:

- Vorlage einer NW-/NT-Dispersion mit zumindest teilweise auf der Metalloberfläche adsorbiertem PVP, wobei das Gewichtsverhältnis zwischen PVP und Metall bevorzugt im Bereich von 0,5 bis 10 liegt und der Gewichtsanteil Metall in der Dispersion zwischen 0,01 und 5 Gew.- % beträgt.

- Zugabe Metallsalz zur NW-/NT-Dispersion, wobei das Verhältnis zwischen zugegebenem Metallsalz und Nanometall in der Dispersion im Bereich zwischen 0,05 und 10 liegt
- Zusatz von auf der Metalloberfläche adsorbierenden und PVP vernetzenden bzw. umsetzenden Adsorptiv bevorzugt in einem Gewichtsanteil zwischen 0,1 und 5 % ggf. bei erhöhter Temperatur
- Zusatz von Reduktionsmittel
- Ggf. Einstellen für die Reduktion geeigneter Reaktionsbedingungen (pH-Wert, Temperatur)

Besonders bevorzugt werden Reduktionsmittel und Adsorptiv gleichzeitig zugegeben, bzw. entsteht bei der Reaktion des Reduktionsmittels eine als Adsorptiv wirkende Substanz. Weiterhin bevorzugte Reduktionsmittel sind Substanzen, die sowohl als Reduktionsmittel, als auch als Adsorptiv wirken. Besonders bevorzugt ist Hydrazin bzw. ein Hydrazinderivat, das bei der Zugabe zur Nanometalldispersion als Adsorptiv wirkende Lauge freisetzt.

Die vorliegende Erfindung umfasst auch die Verwendung der leitfähigen Schichten in chemischen, insbesondere in elektrochemischen Prozessen bzw. in katalytischen, insbesondere in elektrokatalytischen Anwendungen. Zur Illustration der Erfindung werden hier einige bevorzugte Anwendungen einiger leitfähiger Schichten aufgeführt. Es versteht sich von selbst, dass die Anwendungen der Erfindung nicht auf diese Beispiele beschränkt werden soll.

Chemische Katalyse: AgNW-Netzwerk zur Herstellung von Ethylenoxid.

Elektrokatalyse:

- AgNW- oder NiNW-Netzwerk bei der Wasserelektrolyse (sowohl PEM, als auch alkalische Elektrolyse)
- AgNW- oder NiNW-Netzwerk in der alkalischen Brennstoffzelle
- AgNW-Netzwerk oder CuNW-Netzwerk zur $CO_2$-Reduktion
- NiAgNW-, NiCuNW-, CoNW- oder NiNW-Netzwerk ggf. mit Ruthenium und/oder Iridium oder deren Oxiden dotiert in der Wasserelektrolyse
- PtAgNW-Netzwerk oder PtNT-Netzwerk ggf. mit Ruthenium und/oder Iridium oder deren Oxiden dotiert in der Wasserelektrolyse oder der Brennstoffzelle
- AgNW-Netzwerk in Metall-Luft Batterien oder Redox Flow Batterien (RFB)
- AgNW- oder CuNW- oder CoAgNW-Netzwerk in elektrochemischen Kondensatoren
- AgNW-Netzwerk zur elektrochemischen Ozonsynthese

Zum Einsatz in der chemischen Katalyse eignen sich v.a. mechanisch stabile, starre Granalien, die die einzigartigen Eigenschaften der erfindungsgemäßen leitfähigen Schichten auch bei hoher mechanischer Belastung längere Zeit erhalten.

Zum Einsatz in der Elektrokatalyse müssen die erfindungsgemäßen leitfähigen Schichten elektrisch leitfähig mit den Elektroden bzw. mit Stromkollektoren verbunden werden. Dem Stand der Technik sind verschiedene Prinzipien an Elektrosyntheseanlagen, Elektrolyseuren bzw. Brennstoffzellen bekannt. Zum besonders vorteilhaften Einsatz der hoch porösen, elektrisch gut leitfähigen Nanometallstrukturen muss natürlich der jeweiligen Anwendung Rechnung getragen werden.

Bevorzugte Anwendungen der Erfindung erfolgen auf der Oberfläche von konventionellen, flachen oder strukturierten Elektroden. Schichten aus Nanometallnetzwerken werden dabei auf der Oberfläche der Elektrode befestigt bzw. direkt darauf erzeugt. Zur Zu-/Abfuhr von Reaktanden können spezielle Kanäle und Strukturen vorgesehen sein.

Die vorliegende Erfindung umfasst auch die Verwendung der leitfähigen Schichten in Form einer sogenannten zero-gap Anordnung. Dabei werden die erfindungsgemäßen leitfähigen Schichten direkt auf dem elektrisch isolierenden Diaphragma befestigt oder zwischen der Elektrode und dem Diaphragma eingequetscht. Zur Zu-/Abfuhr von Reaktanden können spezielle Kanäle, Strukturen oder makroporöse Gasdiffusionsschichten vorgesehen sein.

Die vorliegende Erfindung umfasst auch die Verwendung der leitfähigen Schichten in sogenannten Elektrolytmembranen. Elektrolytmembranen können ganz oder teilweise aus Polymeren bestehen und anionen- und/oder kationenleitende Funktionalität besitzen. Je nach Funktionalität spricht man auch von Ionenaustauschmembran, Protonenaustauschmembran oder Anionenaustauschmembran. Die Ionen-leitfähigen Eigenschaften können auf Polymere mit ionischen Kopfgruppen oder meist anorganische Füllstoffe zurückgeführt werden. Wie in der wissenschaftlichen Literatur weit verbreitet, wird in dieser Schrift der Begriff PEM (polymer exchange membrane = PEM) als Sammelbegriff für diese Stoffgruppe verwendet.

In den meisten PEM Anordnungen werden die Elektroden, an denen die elektrochemischen Reaktionen ablaufen, direkt auf die PEM beschichtet. Man spricht von einer Membran-Elektroden-Einheit (membrane electrode assembly = MEA). In besonders bevorzugten Ausführungsformen der Erfindung befinden sich die erfindungsgemäßen Nanometallstrukturen direkt auf einer PEM und werden dadurch Teil einer MEA. Stromzufuhr und Reaktanden Zu-/Abfuhr kann, wie in diesen Anordnungen üblich, über Stromkollektoren und Gasdiffusionsschichten (gas diffusion layers = GDL) erfolgen. Besonders bevorzugt ist die Stapelung mehrerer Zellen über sogenannte Bipolarplatten zu stacks. Die Verwendung poröser elektrokatalytisch aktiver Komponenten in den MEAs entspricht, wie oben dargestellt, dem Stand der Technik. Besonders vorteilhaft ist die Verwendung der erfindungsgemäßen Nanometallstrukturen aufgrund der Kombination aus hervorragender elektrischer Leitfähigkeit, hoher Meso- und Makroporosität und großer spezifischer Oberfläche.

In bestimmten Ausführungsformen ist der extrem effiziente Umgang mit teuren Katalysatormaterialien von besonderem Wert. Die Katalysatormaterialien, insbesondere Metalle und daraus durch Nachbehandlung hergestellte Verbindungen wie z.B. Metalloxide können mittels der oben geschilderten Verfahren sehr dünn und trotzdem sehr fest auf die Nanometallstrukturen aufgebracht werden. Gerade im Vergleich zu Kohlenstoff als Trägermaterial für Elektrokatalysatoren ist dieser Vorteil besonders ausgeprägt.

In bevorzugten Ausführungsformen der Erfindung wird die Nanometallschicht mechanisch auf die Membran gedrückt. Besonders bevorzugt werden die Nanometallstrukturen ionenleitfähig mittels sogenannter Ionomere an die PEM angebunden.

Die vorliegende Erfindung umfasst auch die Verwendung der leitfähigen Schichten als GDL oder als Stromkollektor. Diese Verwendungen nutzen die hohen elektrischen Leitfähigkeiten der hochporösen Nanometallstrukturen bei ihrer gleichzeitig hohen mechanischen Stabilität. Insbesondere die dauerhafte Druckstabilität besonderer Ausführungsformen der Erfindung hier besonders vorteilhaft.

**Kurze Beschreibung der Zeichnungen**

Die Erfindung soll nachfolgend anhand von Ausführungsbeispielen im Zusammenhang mit den Zeichnungen näher erläutert werden. Es zeigen

Fig. 1A    Rasterelektronenmikroskopieaufnahme einer Beschichtung mit Silbernanodrähten auf einem PA Gewebe (200 fache Vergrößerung);

Fig. 1B    Rasterelektronenmikroskopieaufnahme der in Figur 1A gezeigten Beschichtung (1250 fache Vergrößerung);

Fig. 2    Rasterelektronenmikroskopieaufnahme einer Silbernanodrahtbeschichtung auf einem Cellulosefasergewebe (1250 fache Vergrößerung);

Fig. 3A    Rasterelektronenmikroskopieaufnahme einer Silbernanodrahtbeschichtung aus einer Formulierung mit Ethanolamin und Verdickungen an den Kreuzungspunkten;

Fig. 3B    Rasterelektronenmikroskopieaufnahme einer Silbernanodrahtbeschichtung aus einer Formulierung ohne Ethanolamin und ohne Verdickungen an den Kreuzungspunkten;

Fig. 4    REM Aufnahme einer Nanometallstruktur aus AgNWs;

Fig. 5    REM Aufnahme einer nicht 2D-Nanometallstruktur aus AgNWs (Stand der Technik);

Fig. 6A    REM Aufnahme einer 3-D Metallnanodrahtstruktur (2000 fache Vergrößerung);

Fig. 6B    REM Aufnahme der in Figur 6A gezeigten 3-D Metallnanodrahtstruktur; ausgebildete metallische Verdickungen an den Kontaktpunkten sich überkreuzender Nanodrähte - chemisch verschweißt;

Fig. 7    Cyclovoltamogramm von polykristallinem Silber und AgNW-Strukturen vergleichend mit den Stromdichten von nanoporösem Silber;

Fig. 8    REM Aufnahme von einer NiAgNW-Struktur, welche aus AgNW-Konzentrat hergestellt wurde;

Fig. 9    REM Aufnahme von einer NiAgNW-Struktur, bei der das Nickel auf eine bestehende AgNW-Struktur beschichtet wurde;

Fig. 10    REM Aufnahme von einer CoAgNW-Struktur, welche aus AgNW-Konzentrat hergestellt wurde;

Fig. 11    REM Aufnahme von einer CoAgNW-Struktur, bei der das Nickel auf eine bestehende AgNW-Struktur beschichtet wurde.

**Wege zur Ausführung der Erfindung**

**Beispiel 1: Herstellung Silbernanodrähte**

Silbernanodrähte wurden in einem Polyolprozess hergestellt entsprechend dem in DE 10 2010 017 706 B4 beschriebenen Verfahren. Bei der Herstellung wurde Silbernitrat (p.a. 99,9 %) mit einer Konzentration von 1,37 % (Gewichtsanteil Gesamtansatz), sowie PVP (Luvitec K-90, BASF) mit einer Konzentration von 2,45 % (Gewichtsanteil Gesamtansatz) eingesetzt, dies entspricht einem Gewichtsverhältnis von PVP zu Silber von 2,86. Nach erfolgter Herstellung wurde die Reaktionsmischung auf Raumtemperatur abgekühlt. Es ergibt sich ein Umsatz von 95% bezogen auf umgesetztes Silber. Mit Rasterelektronenmikroskopie wurde eine mittlere Länge der Silbernanodrähte von 10-30 $\mu$m und eine Dicke zwischen 30-50 nm bestimmt.

**Beispiel 2: Variante Herstellung Silbernanodrähte**

Silbernanodrähte wurden in einem Polyolprozess hergestellt entsprechend dem in DE 10 2010 017 706 B4 beschriebenen Verfahren. Bei der Herstellung wurde Silbernitrat (p.a. 99,9 %) mit einer Konzentration von 1,37 % (Gewichtsanteil Gesamtansatz), sowie PVP (Luvitec K-30, BASF) mit einer Konzentration von 2,45 % (Gewichtsanteil Gesamtansatz) eingesetzt, dies entspricht einem Gewichtsverhältnis von PVP zu Silber von 2,86. Nach erfolgter Herstellung wurde die Reaktionsmischung auf Raumtemperatur abgekühlt.. Es ergibt sich ein Umsatz von 97% bezogen auf umgesetztes Silber. Mit Rasterelektronenmikroskopie wurde eine mittlere Länge der Silbernanodrähte von 5-20 $\mu$m und eine Dicke zwischen 50- 120 nm bestimmt.

**Beispiel 3: Ausfällen der Silbernanodrähte und des gesamten bei der Herstellung eingesetzten PVP durch Phasentrennung - Variante 1**

Zu 100 g abgekühlter Reaktionsmischung Silbernanodrähte gemäß Beispiel 1 wurden unter Rühren 324 g Aceton innerhalb eines Zeitraums von 2 Minuten langsam zugegeben. Der Rührer wurde abgestellt, worauf sofort eine Phasentrennung einsetzt. Nach 5 min hatte sich eine untere graue Phase, die Silbernanodrähte enthält, sowie eine gelbe, durchsichtige, leicht trübe obere Phase gebildet, die offensichtlich keine Silbernanodrähte mehr enthielt. Silbernanodrähte sind in der Mischung visuell leicht zu identifizieren, da Sie eine beige bis silbrig glänzende irisierende Dispersion ergeben. Die obere acetonhaltige Phase wurde abdekantiert und fachgerecht entsorgt. Laut Herstellerangaben sind PVP K-grades in Aceton unlöslich (Broschüre BASF, PVP and more..., LUVITEC®, LUVICROSS® and COLLACRAL®VAL), so dass der Anteil an PVP in der oberen Phase verschwindend gering ist. Die untere Phase bestand aus einem viskosen, pastösen, silberigen Konzentrat. Von dem Konzentrat wurde in einem Muffelofen der Silbergehalt mittels Glührückstand (700°C, 5 min) zu 3,1 % (Gewichtsanteil Konzentrat) bestimmt. Das Konzentrat wurde in einer Kunststoffschraubflasche gelagert. Innerhalb eines Zeitraums von 12 Monaten konnte keine visuelle Veränderung festgestellt werden. Das erhaltene Konzentrat ist mit Lösungsmitteln mischbar, in denen PVP K-grades löslich sind, beispielsweise Wasser und Alkohole wie 2-Propanol.

**Beispiel 4: Ausfällen der Silbernanodrähte und des gesamten bei der Herstellung eingesetzten PVP durch Phasentrennung - Variante 2**

Zu 3800 g abgekühlter Reaktionsmischung Silbernanodrähte gemäß Beispiel 1 wurden unter Rühren 2760 g Essigsäureethylester innerhalb eines Zeitraums von 5 min zugesetzt. Unter fortgesetztem Rühren wurden innerhalb eines Zeitraums von 3 Minuten 1520 g Aceton langsam zugegeben. Nach Beendigung des Rührens setzt eine Phasentrennung ein, die im Vergleich zu Beispiel 2 deutlich langsamer vonstattengeht. Nach 15 Minuten ist die Phasentrennung vollständig, es verbleibt eine untere, silbrig beige Phase, sowie eine gelbe, durchsichtige, leicht trübe obere Phase, die offensichtlich keine bzw. zumindest keine visuell erkennbaren Silbernanodrähte mehr enthält. Laut Herstellerangaben sind PVP K-grades weder in Aceton, noch in Essigsäureethylester löslich (Broschüre BASF, PVP and more..., LUVITEC®, LUVICROSS® and COLLACRAL®VAL), so dass der Anteil an OVP in der oberen Phase verschwindend gering ist. Die untere Phase bestand aus einem viskosen, pastösen, silberigen Konzentrat. Von dem Konzentrat wurde in einem Muffelofen der Silbergehalt mittels Glührückstand (700°C, 5 min) zu 3,0 % (Gewichtsanteil Konzentrat) bestimmt. Das Konzentrat wurde in einer Kunststoffschraubflasche gelagert. Innerhalb eines Zeitraums von 12 Monaten konnte keine visuelle Veränderung festgestellt werden. Das erhaltene Konzentrat ist mit Lösungsmitteln mischbar, in denen PVP K-grades löslich sind, beispielsweise Wasser und Alkohole wie 2-Propanol.

**Beispiel 5: Beschichtung PET-Folie mit Silbernanodrähten aus Konzentrat aus Phasentrennung gemäß Variante 1**

Für die Experimente wurde ein Konzentrat an Silbernanodrähten mit 3,1 % Silber (Gewichtsanteil) gemäß Beispiel 3 verwendet. Für Beschichtungsversuche wurden Formulierungen mit einem Gehalt an Silbernanodrähten von 0,5 % (Gewichtsanteil) hergestellt. Zu diesem Zweck wurden 8,1 g Silbernanodrahtkonzentrat gemäß Beispiel 2 in einem Kunststoffschraubdeckelgefäß mit 41,6 g Wasser versetzt und durch Schütteln homogen dispergiert. Im Anschluss wurden der Dispersion 0,2 g Triton X-100 zugesetzt. Mit Handrakeln wurden auf PET- Folien der Abmessungen von ca. 10x10 cm Nassfilmdicken von 4 $\mu$m, 12 $\mu$m und 24 $\mu$m aufgetragen. Die beschichteten Substrate wurden für 3 min bei 150°C im Ofen getrocknet. Mit einem Vierpunktmessgerät (RCHEK 4 Point Meter, Hersteller EDTM, Modell #RC2175) wurde die elektrische Leitfähigkeit der Substrate gemessen. Innerhalb des Messbereichs des Geräts (1-19990 Ohm/sq.) konnte keine Leitfähigkeit detektiert werden. Aufnahmen im Rasterelektronenmikroskop (REM) an repräsentativen Stellen zeigen, dass ein eindeutig perkoliertes Netzwerk an Silbernanodrähten zumindest bei 12 und 24 $\mu$m Nassfilmdicken vorhanden war.

**Beispiel 6: Beschichtung PET-Gewebe mit Silbernanodrähten aus Konzentrat aus Phasentrennung gemäß Variante 1**

Für die Experimente wurde ein Konzentrat an Silbernanodrähten mit 3,1 % Silber (Gewichtsanteil) gemäß Beispiel 3 verwendet. Für Beschichtungsversuche wurden Formulierungen mit einem Gehalt an Silbernanodrähten von 0,5 % (Gewichtsanteil) hergestellt. Zu diesem Zweck wurden 8,1 g Silbernanodrahtkonzentrat gemäß Beispiel 3 in einem Kunststoffschraubdeckelgefäß mit 41,6 g Wasser versetzt und durch Schütteln homogen dispergiert. Im Anschluss wurden der Dispersion 0,2 g Triton X-100 zugesetzt. Ein weißes PET Gewebe wurde in die Formulierung getaucht, mit einem Metallstab ausgepresst und anschließend für 3 min bei 150°C im Ofen getrocknet. Es wurde ein schwach beiges beschichtetes PET Gewebe erhalten. Aufnahmen im Rasterelektronenmikroskop (REM) an repräsentativen Stellen zeigen, dass ein eindeutig perkoliertes Netzwerk an Silbernanodrähten vorhanden war. Mit einem Vierpunktmessgerät wurde die elektrische Leitfähigkeit des Textils gemessen. Innerhalb des Messbereichs des Geräts (1-19990 Ohm/sq.) konnte keine Leitfähigkeit detektiert werden.

**Beispiel 7: Beschichtung PET-Folie mit Silbernanodrähten aus Konzentrat aus Phasentrennung gemäß Variante 1 nach Zusatz von Ethanolamin**

Für die Experimente wurde ein Konzentrat an Silbernanodrähten mit 3,1 % Silber (Gewichtsanteil) gemäß Beispiel 3 verwendet. Für Beschichtungsversuche wurden Formulierungen mit einem Gehalt an Silbernanodrähten von 0,5 % (Gewichtsanteil) hergestellt. Zu diesem Zweck wurden 8,1 g Silbernanodrahtkonzentrat gemäß Beispiel 2 in einem Kunststoffschraubdeckelgefäß mit 41,6 g Wasser versetzt und durch Schütteln homogen dispergiert. Im Anschluss wurden der Dispersion 0,09 g Ethanolamin und 0,2 g Triton X-100 zugesetzt. Mit Handrakeln wurden auf PET- Folien der Abmessungen von ca. 10x10 cm Nassfilmdicken von 4 $\mu$m, 12 $\mu$m und 24 $\mu$m aufgetragen. Die beschichteten Substrate wurden für 3 min bei 150°C im Ofen getrocknet. Mit einem Vierpunktmessgerät wurde die elektrische Leitfähigkeit der Substrate jeweils an 3 definierten Punkten auf der beschichteten Folie gemessen. Die jeweiligen Minimal- und Maximalwerte sind in Tabelle 1 zusammengefasst:

Tabelle 1

| Nassfilmdicke [$\mu$m] | Oberflächenwiderstand [Ohm/sq.] |
| --- | --- |
| 4 | 48-230 |
| 12 | 26-43 |
| 24 | 15-22 |

**Beispiel 8: Beschichtung PET-Folie mit Silbernanodrähten aus Konzentrat aus Phasentrennung gemäß Variante 2**

Für die Experimente wurde ein Konzentrat an Silbernanodrähten mit 3,0 % Silber (Gewichtsanteil) gemäß Beispiel 4 verwendet. Für Beschichtungsversuche wurden Formulierungen mit einem Gehalt an Silbernanodrähten von 0,5 % (Gewichtsanteil) hergestellt. Zu diesem Zweck wurden 8,3 g Silbernanodrahtkonzentrat gemäß Beispiel 4 in einem Kunststoffschraubdeckelgefäß mit 41,5 g Wasser versetzt und durch Schütteln homogen dispergiert. Im Anschluss wurden der Dispersion 0,2 g Triton X-100 zugesetzt. Mit Handrakeln wurden auf PET- Folien der Abmessungen von ca. 10x10 cm Nassfilmdicken von 4 $\mu$m, 12 $\mu$m und 24 $\mu$m aufgetragen. Die beschichteten Substrate wurden für 3 min bei 150°C im Ofen getrocknet. Mit einem Vierpunktmessgerät wurde die elektrische Leitfähigkeit der Substrate jeweils an 3 definierten Punkten auf der beschichteten Folie gemessen. Die jeweiligen Minimal- und Maximalwerte sind in Tabelle 2 zusammengefasst:

Tabelle 2

| Nassfilmdicke [$\mu$m] | Oberflächenwiderstand [Ohm/sq.] |
|---|---|
| 4 | nicht leitfähig |
| 12 | 200-nicht leitfähig |
| 24 | 29-52 |

**Beispiel 9: Beschichtung PET-Folie mit Silbernanodrähten aus Konzentrat aus Phasentrennung gemäß Variante 2 nach Zusatz von Ethanolamin**

Für die Experimente wurde ein Konzentrat an Silbernanodrähten mit 3,0 % Silber (Gewichtsanteil) gemäß Beispiel 4 verwendet. Für Beschichtungsversuche wurden Formulierungen mit einem Gehalt an Silbernanodrähten von 0,5 % (Gewichtsanteil) hergestellt. Zu diesem Zweck wurden 8,3 g Silbernanodrahtkonzentrat gemäß Beispiel 3 in einem Kunststoffschraubdeckelgefäß mit 41,7 g Wasser versetzt und durch Schütteln homogen dispergiert. Im Anschluss wurden der Dispersion 0,65 g Ethanolamin und 0,2 g Triton X-100 zugesetzt. Mit Handrakeln wurden auf PET-Folien der Abmessungen von ca. 10x10 cm Nassfilmdicken von 4 $\mu$m, 12 $\mu$m und 24 $\mu$m aufgetragen. Die beschichteten Substrate wurden für 3 min bei 150°C im Ofen getrocknet. Mit einem Vierpunktmessgerät wurde die elektrische Leitfähigkeit der Substrate jeweils an 3 definierten Punkten auf der beschichteten Folie gemessen. Die jeweiligen Minimal- und Maximalwerte sind in Tabelle 3 zusammengefasst. Zudem wurde die Transparenz der Substrate gemessen. Hierzu wurde die Transmission der beschichteten Folie bei 460 nm mit einem Photometer gemessen, abzüglich der Transmission der Folie ohne Beschichtung. Die entsprechenden Transmissionswerte sind in Tabelle 3 zusammengestellt:

Tabelle 3

| Nassfilmdicke [$\mu$m] | Oberflächenwiderstand [Ohm/sq.] | Transmission (460nm, PET Substrat subtrahiert) |
|---|---|---|
| 4 | 29-35 | 0,95 |
| 12 | 12-15 | 0,90 |
| 24 | 8-11 | 0,87 |

Aus den Beispielen 6 bis 9 ist ersichtlich, dass der Zusatz der chemischen Komponente Ethanolamin zu einer deutlichen Verbesserung der Oberflächenleitfähigkeit führt. Darüber hinaus ist zu erkennen, dass die Fällung der Silberdrähte zusammen mit dem bei der Synthese eingesetzten PVP Einfluss auf die Oberflächenleitfähigkeit der Schicht hat. Ohne Zusatz der erfindungsgemäßen chemischen Komponenten (Bsp. 6) kommt es nicht zur Ausbildung einer Oberflächenleitfähigkeit im Ohmbereich. Bei der Fällung unter Zusatz einer Verbindung mit Carbonylfunktion (Bsp. 8) können bereits gute Oberflächenleitfähigkeiten erreicht werden, die bei zusätzlichem Zusatz von Ethanolamin weiter verbessert werden. Die besten Ergebnisse werden bei einer Fällung gemäß Variante 2 und dem Zusatz von Ethanolamin (Bsp. 9) erzielt. Die beschriebenen Effekte können durch die zumindest teilweise Verdrängung von PVP durch die chemischen Komponenten und die damit verbundene Erzeugung einer frischen, metallischen nanoskaligen Oberfläche erklärt werden. Ferner ist aus diesen Experimenten klar ersichtlich, dass das Adsorptiv Ethanolamin besonders positive Effekte bewirkt. Das Adsorptiv Essigsäureethylester hat ebenfalls einen positiven Effekt auf die Leitfähigkeit.

**Beispiel 10: Beschichtung PET-Folie mit Silbernanodrähten aus Konzentrat aus Phasentrennung gemäß Variante 2 - Variation Ethanolamingehalt**

Für die Experimente wurde ein Konzentrat an Silbernanodrähten mit 3,0 % Silber (Gewichtsanteil) gemäß Beispiel 4 verwendet. Für Beschichtungsversuche wurden Formulierungen mit einem Gehalt an Silbernanodrähten von 0,5 % (Gewichtsanteil) hergestellt. Die Reihenfolge der Zugabe entspricht der im Beispiel 9 beschriebenen. Der Anteil an Ethanolamin (Gewichtsanteil Gesamtformulierung) wurde zwischen 0,1% und 2,7 % variiert. Nach dem Homogenisieren wurden noch 0,2 g Triton X 100 zugegeben. Mit Handrakeln wurden auf PET- Folien der Abmessungen von ca.

10x10 cm Nassfilmdicken von 4 $\mu$m, 12 $\mu$m und 24 $\mu$m aufgetragen. Die beschichteten Substrate wurden für 3 min bei 150°C im Ofen getrocknet. Mit einem Vierpunktmessgerät wurde der Oberflächenwiderstand der Substrate jeweils an 3 definierten Punkten auf der beschichteten Folie gemessen. Die erhaltenen Ergebnisse sind in Tabelle 4 zusammengestellt.

Tabelle 4: Einfluss des Ethanolamingehalt und der Nassfilmdicke auf den Oberflächenwiderstand von PET Substraten.

| Gewichtsanteil Ethanolamin in Formulierung / % | Nassfilmdicke / $\mu$m | Oberfächenwiderstand / Ohm/sq. |
|---|---|---|
| 0,1 | 4 | 91-172 |
| | 12 | 28-32 |
| | 24 | 15-23 |
| 1,0 | 4 | 199-608 |
| | 12 | 72-128 |
| | 24 | 30-47 |
| 1,3 | 4 | 29-35 |
| | 12 | 12-15 |
| | 24 | 8-11 |
| 1,6 | 4 | 412-690 |
| | 12 | 45-65 |
| | 24 | 22-29 |
| 2,0 | 4 | 159-423 |
| | 12 | 36-55 |
| | 24 | 13-19 |
| 2,7 | 4 | 146-260 |
| | 12 | 37-47 |
| | 24 | 13-18 |

**Beispiel 11: Beschichtung PET-Folie mit Silbernanodrähten aus Konzentrat aus Phasentrennung gemäß Variante 2 nach Zusatz von Triethanolamin**

Für die Experimente wurde ein Konzentrat an Silbernanodrähten mit 3,0 % Silber (Gewichtsanteil) gemäß Beispiel 4 verwendet. Für Beschichtungsversuche wurden wässrige Formulierungen mit 0,55 % Silbernanodrähten und 0,23 % Triethanolamin hergestellt, wobei sich die Prozentangaben auf den jeweiligen Gewichtsanteil an der Gesamtformulierung beziehen. PET Substrate wurden mit einer Handrakel mit Nassfilmdicken von 4 bzw. 12 $\mu$m beschichtet. Beschichtete PET Substrate wurden bei 150°C für 3 min getrocknet. Für die Nassfilmdicke von 4 $\mu$m wurden Oberflächenwiderstände von 67-82 Ohm/sq., für Nassfilmdicken von 12 $\mu$m Oberflächenwiderstände zwischen 22-28 Ohm/sq. gemessen.

**Beispiel 12: Beschichtung PET-Gewebe mit Silbernanodrähten aus Konzentrat aus Phasentrennung gemäß Variante 2 nach Zusatz von Ethanolamin**

Eine Beschichtungsformulierung mit einem Gewichtsanteil an Silbernanodrähten von 0,5 % bezogen auf die gesamte Formulierung gemäß Beispiel 9 wurde hergestellt. Als zu beschichtendes Substrat wurde Polyestergewebe verwendet. Substrate der Größe von ca. 10x10 cm wurden verwendet. Das Substrat wurde vollständig mit Beschichtungsformulierung benetzt und anschließend mit einer Handrakel ausgepresst. Die beschichteten Substrate wurden für 10 min bei 150°C im Ofen getrocknet. Mit einem Vierpunktmessgerät wurde der Oberflächenwiderstand der Substrate jeweils an 3 definierten Punkten auf dem beschichteten Gewebe bestimmt (jeweils Vorder- und Rückseite). Der Oberflächenwiderstand variierte auf der Vorderseite zwischen 40-140 Ohm/sq. und auf der Rückseite zwischen 60-150 Ohm/sq.

**Beispiel 13: Beschichtung PA-Gewebe mit Silbernanodrähten aus Konzentrat aus Phasentrennung gemäß Variante 2 nach Zusatz von Ethanolamin**

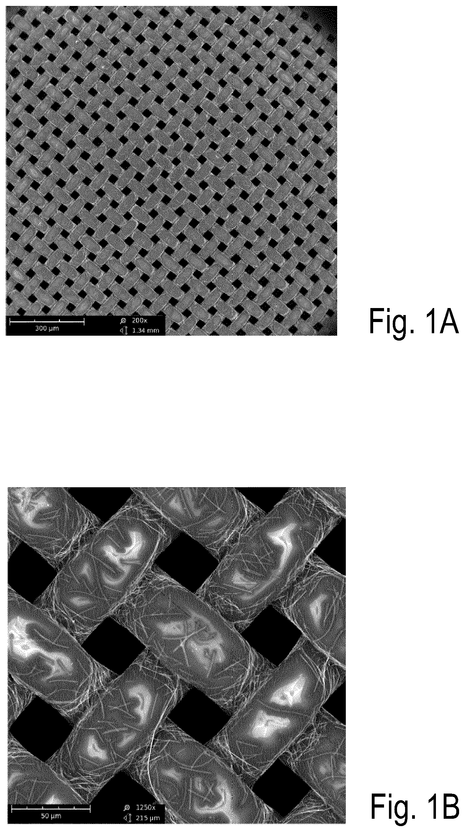

Eine Beschichtungsformulierung mit einem Gewichtsanteil an Silbernanodrähten von 0,5 % bezogen auf die gesamte Formulierung gemäß Beispiel 9 wurde hergestellt. Der Anteil an Ethanolamin (Gewichtsanteil Gesamtformulierung) wurde auf 1,3 % eingestellt und 0,3 % Triton X-100 zugegeben. Als zu beschichtendes Substrat wurde Polyamidmonofilamentgewebe mit einer Maschenweite von 25 μm verwendet. Das Substrat wurde vollständig mit Beschichtungsformulierung benetzt und anschließend mit einer Handrakel ausgepresst. Die beschichteten Substrate wurden für 3 min bei 150°C im Ofen getrocknet. Mit einem Vierpunktmessgerät wurde der Oberflächenwiderstand der Substrate jeweils an 3 definierten Punkten auf dem beschichteten Gewebe bestimmt (jeweils Vorder- und Rückseite). Der Oberflächenwiderstand variierte auf der Vorderseite zwischen 80-110 Ohm/sq. und auf der Rückseite zwischen 130-150 Ohm/sq. Von den beschichteten Proben wurden Aufnahmen mit dem Rasterelektronenmikroskop gemacht. Zwei unterschiedliche Vergrößerungen sind in Figur 1 gezeigt. In Figur 1 links im Bild ist die Struktur des textilen Gewebes zu sehen, sowie Silbernanodrähte (helle Bereiche), die sich in einem perkolierenden Netzwerk auf den einzelnen Fasern befinden. Ein vergrößerter Ausschnitt (Figur 1 rechts) verdeutlicht zudem die Homogenität und den Grad der Perkolation. Ferner ist ersichtlich, dass sich die Silbernanodrähte aufgrund ihrer Duktilität an die Faser anschmiegen, es sind keine abstehenden Silbernanodrähte vorhanden. Außerdem ist lediglich die textile Faser beschichtet, die Maschen sind frei von Silbernanodrähten. Des Weiteren ist der Grad der Perkolation an sich überkreuzenden Maschen besonders hoch, vorteilhaft für einen verbesserten Kontakt an den Kreuzungspunkten und eine homogene flächige Leitfähigkeit.

**Beispiel 14: Vergleich Beschichtung PA Gewebe mit Formulierung mit und ohne Zusatz von Ethanolamin**

Zwei Beschichtungsformulierungen mit einem Gewichtsanteil an Silbernanodrähten von 0,5 % bezogen auf die gesamte Formulierung gemäß Beispiel 9 wurden hergestellt. Der ersten Formulierung, die nachfolgend mit F14.1 bezeichnet wird, wurden 1,3 % Ethanolamin (Gewichtsanteil Gesamtformulierung) zugesetzt. Der zweiten Formulierung, nachfolgend mit F14.2 bezeichnet, wurde kein Ethanolamin zugesetzt. Ansonsten waren die Formulierungen identisch. Mit beiden Formulierungen wurden identische Beschichtungsexperimente durchgeführt, wie nachfolgend beschrieben. Für die zu beschichtenden Substrate wurde Polyamidmonofilamentgewebe mit einer Maschenweite von 25 μm verwendet. Die Substrate wurden vollständig mit Beschichtungsformulierung benetzt und anschließend mit einer Handrakel ausgepresst. Die beschichteten Substrate wurden für 3 min bei 150°C im Ofen getrocknet. Mit einem Vierpunktmessgerät wurde der Oberflächenwiderstand der Substrate jeweils an 3 definierten Punkten auf dem beschichteten Gewebe bestimmt (jeweils Vorder- und Rückseite). Die Ergebnisse sind in nachfolgender Tabelle zusammengestellt:

Tabelle 5

| verwendete Formulierung | Oberflächen widerstand Vorderseite [Ohm/sq.] | Oberflächenwiderstand Rückseite [Ohm/sq.] |
|---|---|---|
| F14.1 | 80-110 | 90-150 |
| F14.2 | > 1300 | > 500 |

**Beispiel 15: Beschichtung Cellulosefaser basiertes Substrat mit Silbernanodrähten aus Konzentrat aus Phasentrennung gemäß Variante 2 nach Zusatz von Ethanolamin**

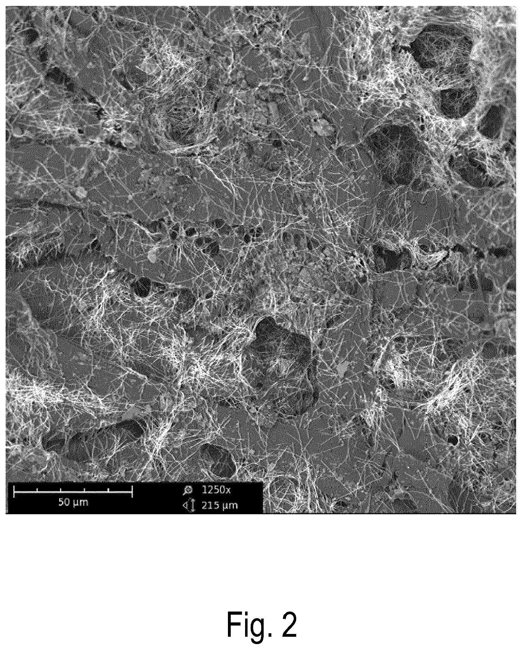

Eine Formulierung gemäß Beispiel 13 wurde hergestellt. Ein auf Cellulosefaser basiertes Substrat wurde vollständig mit Beschichtungsformulierung benetzt und anschließend mit einer Handrakel ausgepresst. Die beschichteten Substrate wurden für 3 min bei 150°C im Ofen getrocknet. Mit einem Vierpunktmessgerät wurde der Oberflächenwiderstand der Substrate jeweils an 3 definierten Punkten auf dem beschichteten Gewebe bestimmt (jeweils Vorder- und Rückseite). Der Oberflächenwiderstand variierte auf der Vorderseite zwischen 10-20 Ohm/sq. und auf der Rückseite zwischen 15-20 Ohm/sq. Von den beschichteten Proben wurden Aufnahmen mit dem Rasterelektronenmikroskop gemacht, wie exemplarisch in Figur 2 illustriert. Aus der Aufnahme wird deutlich, dass sich ein Netzwerk aus Silbernanodrähten gebildet hat, es sind sowohl die einzelnen Fasern, als auch die Zwischenräume mit Silbernanodrähten beschichtet. Ferner wird klar, dass sich die Nanodrähte nicht nur an der Faseroberfläche, sondern auch seitlich und unter sich überlagernden Fasern befinden. Dadurch ist auch die sehr gute Leitfähigkeit der Proben zu erklären.

**Beispiel 16: Beschichtung PET Substrate mittels Transferdruck**

Eine Formulierung mit 1,0 % (Gewichtsanteil) Silbernanodrähten wurde hergestellt. Ausgehend von einem Konzentrat gemäß Beispiel 4 wurde eine wässrige Formulierung mit 1,0 % Silber, 0,5 % Hydroxypropylmethylcellulose und 1,3 % Ethanolamin hergestellt. Zunächst wurde ein Film mit definierter Nassfilmdicke auf eine PET-Folie (10x10 cm) aufgebracht, das textile Substrat identischer Abmessung auf die beschichtete Folie gelegt und mit einem Metallstab auf die Folie gepresst. Der textile Träger wurde 10 min bei 150°C getrocknet. Mit einem Vierpunktmessgerät wurde der Oberflächenwiderstand der Substrate jeweils an 3 definierten Punkten auf dem beschichteten Gewebe bestimmt (jeweils Vorder- und Rückseite) und der Mittelwert gebildet. In nachfolgender Tabelle sind die Ergebnisse zusammengefasst:

Tabelle 6

| Nassfilmdicke / $\mu$m | Oberflächenwiderstand Vorderseite / Ohm/sq. | Oberflächen widerstand Rückseite / Ohm/sq. |
|---|---|---|
| 12 | nicht leitfähig | nicht leitfähig |
| 24 | nicht leitfähig | nicht leitfähig |
| 40 | 300 | nicht leitfähig |
| 80 | 50 | 90 |
| 100 | 25 | 25 |
| 150 | 12 | 13 |

**Beispiel 17: Beschichtung PA-Gewebe mittels Sprühbeschichtung**

Eine Formulierung mit 0,5 % (Gewichtsanteil) Silbernanodrähten wurde hergestellt. Ausgehend von einem Konzentrat gemäß Beispiel 4 wurde eine wässrige Formulierung mit 0,5 % Silber, 1,3 % Ethanolamin, 10 % 2-Propanol und 0,3 % Triton X-100 hergestellt. Zum Aufsprühen wurde eine konventionelle Airbrushpistole verwendet. Das Substrat wurde vollständig benetzt. Der textile Träger wurde 10 min bei 150°C getrocknet. Mit einem Vierpunktmessgerät wurde der Oberflächenwiderstand der Substrate jeweils an 3 definierten Punkten auf dem beschichteten Gewebe bestimmt, ein mittlerer Oberflächenwiderstand von 40 Ohm/sq. wurde gemessen.

**Beispiel 18: Beschichtung PET Gewebe, Zusatz unterschiedlicher Additive**

Ausgehend von einem Konzentrat gemäß Beispiel 4 wurde eine wässrige Formulierung mit 0,5 % Silber, 5 % aliphatische Polyesterurethanpolymerdispersion mit anionischer Partikelladung (Feststoffanteil), 1% Aziridin basierter Quervernetzer und 2,5% Ethanolamin (sämtliche Prozentangaben beziehen sich auf den Gewichtsanteil der Gesamtformulierung) hergestellt. Ein PET- Gewebe wurde vollständig mit Beschichtungsformulierung benetzt und anschließend mit einer Handrakel ausgepresst. Die beschichteten Substrate wurden für 10 min bei 150°C im Ofen getrocknet. Mit einem Vierpunktmessgerät wurde der Oberflächenwiderstand der Substrate jeweils an 3 definierten Punkten auf dem beschichteten Gewebe bestimmt (jeweils Vorder- und Rückseite). Auf der Vorderseite wurden Oberflächenwiderstände zwischen 40-80 Ohm/sq., auf der Rückseite 50-80 Ohm/sq. bestimmt.

**Beispiel 19: Beschichtung PA Gewebe, Zusatz Verdicker**

Eine Formulierung mit 0,5 % (Gewichtsanteil) Silbernanodrähten wurde hergestellt. Ausgehend von einem Konzentrat gemäß Beispiel 4 wurde eine wässrige Formulierung mit 1,0 % Silber, 0,5 % Cellulose basierter Verdicker und 1,3 % Ethanolamin zugesetzt. Ein PA Gewebe wurde mittels Transferdruck beschichtet. Ja nach Nassfilmdicke wurden Oberflächenwiderstände zwischen 200 Ohm/sq. und 15 Ohm/sq. gemessen.

**Beispiel 20: IR-Reflexion an Foliensubstraten**

Verwendet wurde eine wässrige Beschichtungsformulierung mit 0,6 % Silbernanodrähten (Gewichtsanteil), 1,3 % Ethanolamin (Gewichtsanteil) und 0,4 % Triton-X 100 (Gewichtsanteil). Auf PET Substrate wurden mit Handrakeln unterschiedliche Nassfilmdicken im Bereich von 4 $\mu$m bis 200 $\mu$m aufgebracht und in einem Ofen bei 150°C für 3 Minuten getrocknet. Mit einem Vierpunktmessgerät (RCHEK 4 Point Meter, Hersteller EDTM, Modell #RC2175) wurde der Oberflächenwiderstand der Substrate gemessen. Anschließend wurde der thermische Emissionsgrad $\varepsilon$ der beschichteten Seite aller untersuchten Proben bei Raumtemperatur bestimmt, wobei folgender Zusammenhang mit dem gemessenen spektralen gerichtet-hemisphärischen Reflexionsgrad $R_{gh}$ gilt: $\varepsilon = 1 - R_{gh}$. $R_{gh}$ wurde in einem Wellenlängenbereich zwi- schen 1,4 $\mu$m und 18 $\mu$m bestimmt. In nachfolgender Tabelle sind die Ergebnisse in Abhängigkeit des Oberflächenwiderstands gezeigt.

Tabelle 7

| Oberflächenwiderstand [Ohm/sq.] | ε |
|---|---|
| 110 | 0,40 |
| 55 | 0,26 |
| 50 | 0,19 |
| 11 | 0,21 |
| 8 | 0,19 |

Aus den Ergebnissen wird deutlich, dass die Reflexion von der Oberflächenleitfähigkeit und somit von der Menge der Silbernanodrähte pro Oberflächeneinheit abhängt. Je nach Menge an Silbernanodrähte kann der Reflexionsgrad variiert werden.

**Beispiel 21: IR-Reflexion an Textilsubstraten**

5 unterschiedliche wässrige Beschichtungsformulierungen wurden hergestellt. Jede Formulierung enthielt 1,3 % Ethanolamin (Gewichtsanteil) und 0,4 % Triton-X 100 (Gewichtsanteil). Der Gewichtsanteil an Silbernanodrähten wurde variiert: 1.0%, 0,5%, 0,2%, 0,1% und 0,05% (jeweils Gewichtsanteile). Als zu beschichtendes Substrat wurde Polyestergewebe verwendet. Substrate der Größe von ca. 10 cm x 10 cm wurden verwendet. Das Substrat wurde vollständig mit Beschichtungsformulierung benetzt und anschließend mit einer Handrakel ausgepresst. Die beschichteten Substrate wurden für 10 min. bei 150°C im Ofen getrocknet. Mit einem Vierpunktmessgerät (RCHEK 4 Point Meter, Hersteller EDTM, Modell #RC2175) wurde der Oberflächenwiderstand der Substrate gemessen. Je nach Oberflächenleitfähigkeit und Silbergehalt auf dem textilen Träger konnten im Wellenlängenbereich zwischen 3.000 $\mu$m und 20.000 $\mu$m Reflexionen im Bereich zwischen 0,1 bis 0,6 ermittelt werden.

**Beispiel 22: IR-Reflexion an strukturierten Textilsubstraten**

Verwendet wurde eine wässrige Beschichtungsformulierung mit 0,6 % (Gewichtsanteil) Silbernanodrähten, 1,3 % (Gewichtsanteil) Ethanolamin und 0,4 % (Gewichtsanteil) Triton-X 100. Als Substrat wurde ein vorbeschichtetes Textil verwendet, um die Saugfähigkeit des Textils zu minimieren. Durch die Vorbeschichtung entstand auf der textilen Oberfläche eine Struktur mit Vertiefungen mit wenigen hundert $\mu$m Durchmesser. Nach einer Beschichtung mittels Transferdruck befand sich die Beschichtungsformulierung weitgehend in diesen Vertiefungen. Die beschichteten Substrate wurden für 10 min. bei 150°C im Ofen getrocknet. Mit einem Vierpunktmessgerät (RCHEK 4 Point Meter, Hersteller EDTM, Modell #RC2175) wurde der Oberflächenwiderstand der Substrate gemessen. Eine Oberflächenleitfähigkeit konnte nicht gemessen werden, weil sich diskrete leitfähige Inseln mit einem Durchmesser von wenigen hundert $\mu$m gebildet hatten, während der Abstand der Elektroden mehrere Zentimeter betrug. Dennoch konnten je nach Auftragsdicke in einem Wellenlängenbereich zwischen 3.000 $\mu$m und 20.000 $\mu$m Reflexionen im Bereich zwischen 0,1 bis 0,6 ermittelt werden.

**Beispiel 23: Mikrowellentransmission beschichteter Textilsubstrate**

Von den gemäß Beispiel 21 hergestellten beschichteten Textilsubstarten wurde die Mikrowellentransmission in einem Frequenzbereich zwischen 8-12 GHz bestimmt. Je nach Silbergehalt wurden Transmissionen zwischen 10-90% gemessen. Das Beispiel zeigt, dass für den genannten Frequenzbereich die Transmissionswerte je nach Silbergehalt gezielt eingestellt werden können.

**Beispiel 24: Ausbildung verbesserter Kontakt übereinanderliegender Silbernanodrähte**

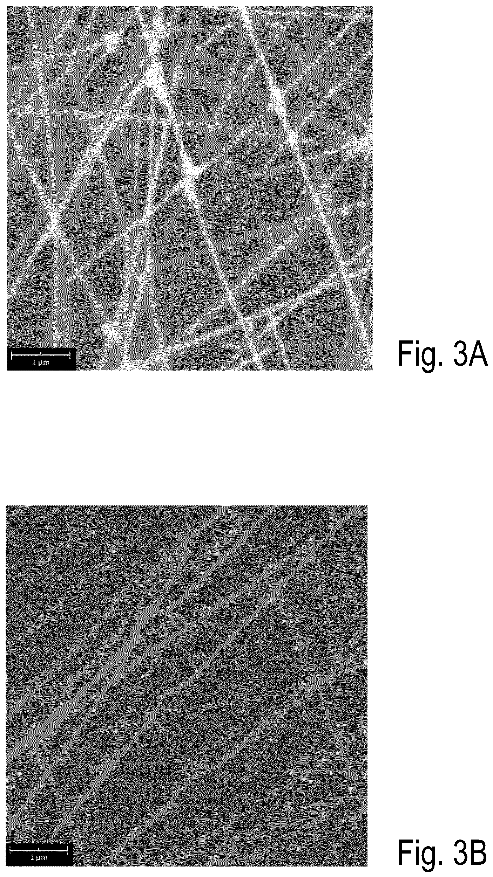

Ausgehend von einem Konzentrat gemäß Beispiel 4 wurden zwei Formulierungen mit 0,5 % Silber und 0,3 % Triton X-100 in Wasser hergestellt. Einer der beiden Formulierungen wurden zusätzlich 1,3 % Ethanolamin zugesetzt. Für jede Formulierung wurde mit einer Handrakel ein Nassfilm von 150 $\mu$m aufgebracht und bei 150°C für 3 min im Ofen getrocknet. Für die Beschichtung mit Ethanolamin in der Formulierung wurde ein Oberflächenwiderstand von 3-4 Ohm/sq. bestimmt. Von beiden Proben wurde ein Quadrat von 1 cm$^2$ ausgeschnitten und im Rasterelektronenmikroskop betrachtet. In Figur 3 sind die beiden Schichten gegenübergestellt. An den Kreuzungspunkten ist klar ersichtlich, dass bei der Formulierung mit Ethanolamin an den Kreuzungspunkten Kontaktpunkte und Verdickungen ausgebildet wurden, die zu der hohen Leitfähigkeit führen. Bei der Formulierung ohne Ethanolamin sind diese Kontaktpunkte nicht vorhanden. Bei den Verdickungen handelt es sich um Abscheidungen von Silber. Die erfindungsgemäße Behandlung der Nanodrähte mit den chemischen Komponenten, insbesondere der chemischen Komponente Ethanolamin führt offensichtlich zur selektiven Ausbildung hervorragender metallischer Kontakte an den Kreuzungspunkten der Drähte. Die Drähte werden dabei zu einem metallischen Netzwerk verschweißt (chemical welding).

**Beispiel 25: Gewaschene Siibernanodrähte mit und ohne Zusatz der chemischen Komponente Ethanolamin im Vergleich**

15,59 g Konzentrat an Silbernanodrähten gemäß Beispiel 4 wurden mit 185 g Wasser versetzt und durch Aufschütteln homogen dispergiert. Die Dispersion wurde bei 2000 rpm für 100 min zentrifugiert, die weitgehend klare überstehende Phase wurde verworfen, der Niederschlag mit Wasser redispergiert. Ziel dieses zusätzlichen Aufreinigungsschrittes war es, überschüssiges PVP abzutrennen. Da PVP gut wasserlöslich ist, wird ein großer Teil überschüssiges PVP entfernt. Anschließend wurden ausgehend von den gewaschenen Silbernanodrähten 2 Formulierungen hergestellt. Formulierung 21.1. enthielt 0,6 % Silbernanodrähte, 0,6 % TX-100 und 10 % 2-Propanol und Wasser (die Prozentangaben sind Gewichtsanteile). Formulierung 21.2. enthielt 0,6 % Silbernanodrähte, 0,6 % TX-100 und 10 % 2-Propanol, 2% Ethanolamin und Wasser (die Prozentangaben sind Gewichtsanteile). Die beiden Formulierungen waren bis auf das Adsorptiv Ethanolamin identisch. Anschließend wurden für jede Formulierung unterschiedliche Nassfilmdicken mit Handrakeln (4 $\mu$m, 12 $\mu$m und 24 $\mu$m) auf Folie aufgebracht und bei 150 °C für 3 min im Ofen getrocknet. Im Anschluss wurden die Oberflächenleitfähigkeiten der beschichteten Substrate mit einem Vierpunktmessgerät an 3 repräsentativen Punkten bestimmt. Die jeweiligen Minimal- und Maximalwerte sind in nachfolgender Tabelle zusammengefasst:

Tabelle 8

| Formulierung | Nassfilmdicke / $\mu$m | Oberflächenleitfähigkeit / Ohm/sq. |
|---|---|---|
| 21.1. | 4 | 210-360 |
| 21.2 | 4 | 50-70 |
| 21.1. | 12 | 18-27 |
| 21.2 | 12 | 12-15 |
| 21.1. | 24 | 8-13 |
| 21.2 | 24 | 5-7 |

Die Experimente zeigen, dass durch den Waschschritt ohne das Adsorptiv Ethanolamin (Formulierung 21.1.) gute Leitfähigkeitswerte erzielt werden können, dass aber der Zusatz von Ethanolamin (Formulierung 21.2.) nochmals zu einer deutlichen Verbesserung der Leitfähigkeit führt.

**Beispiel 26: Herstellung AgNW Dispersion**

AgNWs wurden in einem Polyolprozess hergestellt entsprechend dem in der DE 10 2010 017 706 B4 beschriebenen Verfahren. Bei der Herstellung wurde Silbernitrat (p.a. 99,9 %) mit einer Konzentration von 1,3 % (Gewichtsanteil Gesamtansatz), sowie PVP (Luvitec K-90, BASF) mit einer Konzentration von 2,45 % (Gewichtsanteil Gesamtansatz) eingesetzt, dies entspricht einem Gewichtsverhältnis von PVP zu Silber von 2,8. Nach erfolgter Herstellung wurde die Reaktionsmischung auf Raumtemperatur abgekühlt. Eine Umsatzbestimmung ergab einen Umsatz bezogen auf umgesetztes Silber von 95%. Mit Rasterelektronenmikroskopie (REM) wurde die Länge der AgNWs von 10-30 $\mu$m und die Dicke zwischen 40-70 nm bestimmt.

Zu 100 g abgekühlter Reaktionsmischung AgNWs wurde unter Rühren 324 g Aceton langsam zugegeben innerhalb eines Zeitraums von 2 Minuten. Der Rührer wurde abgestellt, sofort setzt eine Phasentrennung ein. Nach 5 min hatte sich eine untere graue Phase, die offensichtlich die Silbernanodrähte enthielt, sowie eine gelbe durchsichtige leicht trübe obere Phase die offensichtlich keine AgNWs mehr enthielt, gebildet. AgNWs sind in der Mischung visuell leicht zu identifizieren, da Sie eine beige bis silbrig glänzende irisierende Dispersion darstellen. Die obere acetonhaltige Phase wurde abdekantiert und verworfen. Laut Herstellerangaben sind PVP K-grades in Aceton unlöslich, so dass der Anteil an PVP in der oberen Phase verschwindend gering war. Die untere Phase bestand aus einem viskosen und pastösen silbrigen Konzentrat. Von dem Konzentrat wurde in einem Muffelofen der Silbergehalt mittels Glührückstand (700°C, 5 min) zu 3,1 % (Gewichtsanteil Konzentrat) bestimmt. Das erhaltene Konzentrat ist mit Lösungsmitteln mischbar, in denen PVP K-grades löslich sind, beispielsweise Wasser und Alkohole wie 2-Propanol.

**Beispiel 27: Alternative Herstellung AgNW Dispersion**

Zu 3800 g abgekühlter Reaktionsmischung AgNW gemäß Beispiel 26 wurden unter Rühren 2760 g Essigsäureethylester innerhalb eines Zeitraums von 5 min zugesetzt. Unter fortgesetztem Rühren wurden innerhalb eines Zeitraums von 3 Minuten 1520 g Aceton langsam zugegeben. Nach Beendigung des Rührens setzt eine Phasentrennung ein, die deutlich langsamer im Vergleich zu Beispiel 26 vonstattengeht. Nach 15 Minuten ist die Phasentrennung vollständig, es verbleibt eine untere silbrig beige Phase, sowie eine gelbe durchsichtige leicht trübe obere Phase, die offensichtlich zumindest visuell keine AgNWs mehr enthielt. Laut Herstellerangaben sind PVP K-grades weder in Aceton, noch in Essigsäureethylester löslich, so dass der Anteil an OVP in der oberen Phase verschwindend gering ist. Die untere Phase bestand aus einem viskosen und pastösen silbrigen Konzentrat. Von dem Konzentrat wurde in einem Muffelofen der Silbergehalt mittels Glührückstand (700°C, 5 min) zu 3,0 % (Gewichtsanteil Konzentrat) bestimmt. Das erhaltene Konzentrat ist mit Lösungsmitteln mischbar, in denen PVP K-grades löslich sind, beispielsweise Wasser und Alkohole wie 2-Propanol.

In den Beispielen 26 und 27 sind zwei verschiedene Möglichkeiten zur Herstellung von PVP beinhaltenden AgNW Dispersionen dargestellt. Die Synthese der AgNWs wird in beiden Beispielen nach dem Polyolprozess durchgeführt. Zahlreiche Verfahrensvarianten sind dem Stand der Technik bekannt. Bei der Herstellung von AgNWs über den Polyolprozess wird ausschließlich PVP als Schutzkolloid verwendet. Das PVP adsorbiert beim Kristallwachstum der Stäbe bevorzugt an den Seitenflächen, während die Stabspitzen durch spezielle, ätzende Zusätze von PVP frei gehalten werden. Das PVP umhüllt also die AgNWs in der Syntheselösung praktisch vollständig. In den Beispielen 26 und 27 wurden mit geeigneten Lösungsmitteln die PVP umhüllten AgNWs und ggf. noch frei vorliegendes PVP in einer Phase aufkonzentriert. Die derart aufkonzentrierten Dispersionen eignen sich besonders zur Herstellung der erfindungsgemäßen Gerüststrukturen.

**Beispiel 28: Herstellung AgNW-Struktur**

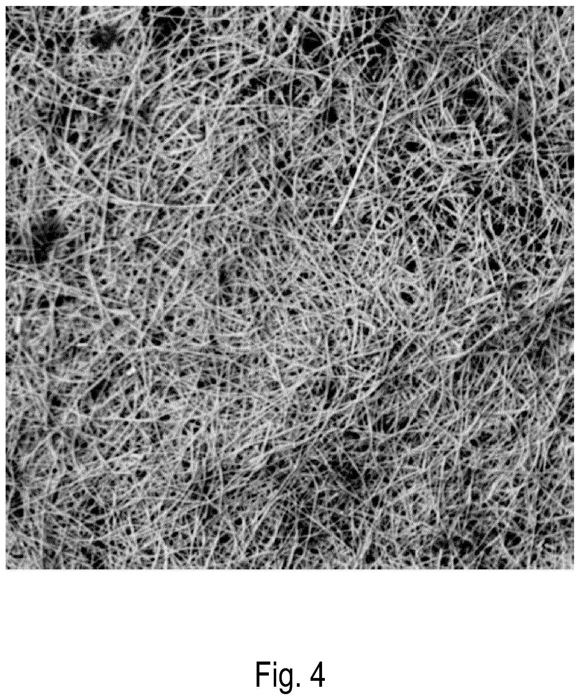

30 g des AgNW Konzentrates aus Beispiel 27 werden mit entionisiertem Wasser auf 1000 g Gesamtgewicht gebracht. Die Lösung wird auf einer Heizplatte unter gelindem Rühren auf 90 °C erhitzt und mit 300 g einer ebenfalls auf 90 °C vortemperierten, 5 Gew.% igen NaOH Lösung versetzt. Die Temperatur der vereinigten Lösungen wird ohne Rühren für 30 Minuten bei 90 °C gehalten. Es bildet sich eine hochporöse Nanometallgerüststruktur aus, die nach dem Abkühlen der Reaktionslösung mehrfach mit entionisiertem Wasser gewaschen wird. Nach dem Gefriertrocknen wird die Struktur mittels REM untersucht (siehe Figur 4). Die AgNWs liegen im Inneren der Struktur ungeordnet im Raum verteilt vor. Lediglich an den äußeren Grenzflächen sind die NWs größtenteils flach angeordnet. Eine Bestimmung der Dichte ergibt einen Wert von 0,074 g/cm$^3$. Zusammen mit dem REM Befund und der Dichte von reinem Silber lässt sich daraus der vom Metall belegte Volumenanteil zu 0,7 % bestimmen. Die Struktur ist mechanisch weitgehend beständig. Trotz der hohen Porosität kann sie trocken zerstörungsfrei manipuliert werden. Der elektrische Widerstand eines trockenen Stückes des Netzwerkes mit etwa 10 x 10 x 0,5 mm$^3$ beträgt 0,5 Ohm. Wird die Struktur auf einer Fritte mit Wasser durchspült, verliert sie ebenfalls nicht ihren Zusammenhalt. Der Austrag einzelner AgNWs kann visuell nicht beobachtet werden.

**Beispiel 29: Herstellung AgNW-Struktur- 2-D Metallnanodrahtstruktur gemäß Stand der Technik**

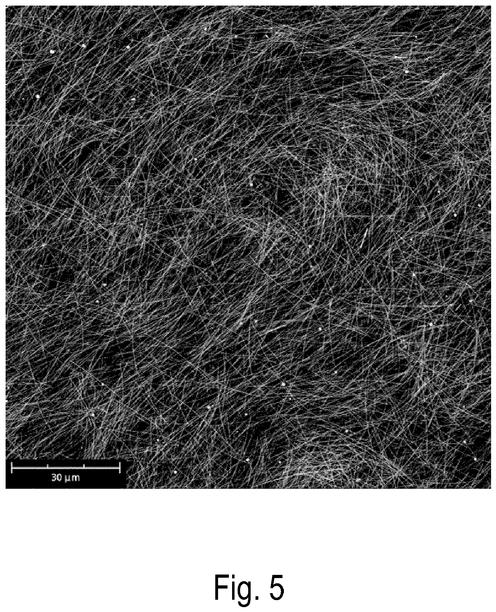

Ausgehend von einem Konzentrat gemäß Beispiel 27 wurde eine wässrige Formulierung mit 0,5 % Silber und 0,3 % Hydropalat® WE 3475 (BASF) hergestellt. Anschließend wurde die Formulierung in unterschiedlichen Nassfilmdicken auf ein geeignetes Substrat aufgebracht (PET-Folie, Membran, Silberplättchen). Die Nassfilmdicken wurden zwischen 40 µm und 150 µm variiert. Die beschichteten Substrate wurden für 5 min bei 150°C im Ofen getrocknet. Für Beschichtungen auf PET- Folie wurde mit einem Vierpunktmessgerät (RCHEK 4 Point Meter, Hersteller EDTM, Modell #RC2175) die Oberflächenleitfähigkeit der Substrate gemessen. Für eine Nassfilmdicke von 80 µm wurde auf PET ein mittlerer Oberflächenwiderstand von 25 Ohm/sq. bestimmt, für Nassfilme von 150 µm ein mittlerer Oberflächenwiderstand von 6 Ohm/sq. Die Substrate wurden im Rasterelektronenmikroskop betrachtet. Die Strukturen weisen zwar eine gute Oberflächenleitfähigkeit auf, es handelt sich aber nicht um eine erfindungsgemäße hochporöse 3-D Struktur, sondern um eine dichte Schicht aus Silbernanodrähten, die sich weitgehend in der Beschichtungsebene (2-D) befinden und übereinander zu liegen kommen. Diese 2-D Metallnanodrahtstrukturen sind exemplarisch anhand einer REM Aufnahme einer Beschichtung von 150 µm Nassfilmdicke in Figur 5 gezeigt.

**Beispiel 30: Herstellung 3-D Metallnanodrahtstruktur**

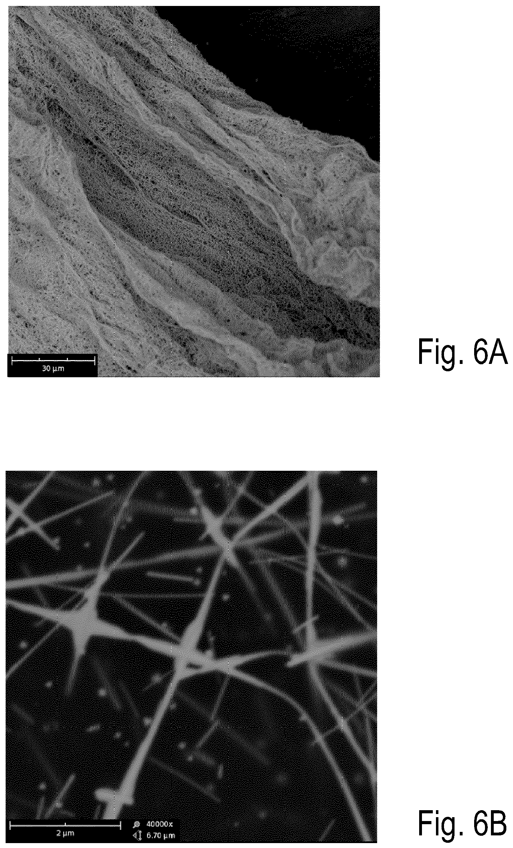

In einem Rollrandglas wurden 1,34 g Silbernanodrähte aus dem Konzentrat gemäß Beispiel 27 in 21,4 g Wasser homogen dispergiert. Anschließend wurden 0,6 g Ethanolamin zugetropft und durch Schütteln homogen verteilt. Dem Rollrandglas wurde ein perforierter Deckel aufgesetzt und anschließend auf einer Heizplatte die Mischung zum Sieden erhitzt. Umgehend nachdem die Mischung sprudelnd kochte wurde sie von der Heizplatte genommen. Nach etwa 2 Minuten setzt sich oberhalb der flüssigen Phase eine metallisch graue schwammartige Struktur mit einer Stärke im Zentimeterbereich ab. Die flüssige Phase klart sich auf und verarmt offensichtlich an Silbernanodrähten. Nach ca. 5 Minuten ist die Ausbildung der Struktur vollständig, die Struktur wurde entnommen und auf ein Filterpapier gelegt und mit entionisiertem Wasser gewaschen. Anschließend wurde die Struktur im Ofen bei 150°C für 15 min getrocknet. Es verbleibt eine elastische mechanisch stabile hochporöse 3-dimensionale Schwammstruktur. Mit einem Multimeter wurde die elektrische Leitfähigkeit der Metallstruktur mit einem Elektrodenabstand von 1 cm zu 0,4 Ohm bestimmt. In den Figuren 6A und 6B sind Rasterelektronenmikroskopieaufnahmen der Strukturen gezeigt. Die Strukturen unterscheiden sich klar von der 2-D Struktur aus Beispiel 29. Die Strukturen bilden ein hochporöses dreidimensionales Netzwerk. Weiterhin ist ersichtlich, dass an den Kontaktflächen der Drähte sich metallische Verdickungen ausgebildet haben, die zu einem verbesserten interstrukturellen Kontakt des Geflechts führt und folglich die Leitfähigkeit und die mechanische Festigkeit erhöht. Die einzelnen Drähte sind chemisch verschweißt. Die getrockneten Strukturen wurden über Nacht in Wasser gelagert, visuell konnte keine Veränderung der Struktur festgestellt werden, die Elastizität und Festigkeit waren unverändert.

**Beispiel 31: Verwendung AgNW-Struktur zur elektrochemischen $CO_2$-Fixierung**

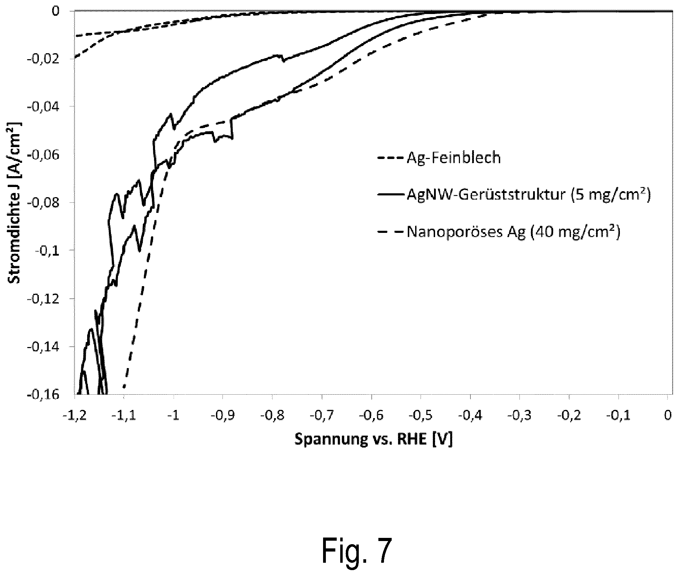

Die in Beispiel 28 hergestellten Silbernanodrahtstrukturen wurden auf ihre katalytischen Eigenschaften zur elektrochemischen $CO_2$-Fixierung, d.h. auf ihre katalytische Aktivität $CO_2$ elektrochemisch selektiv zu CO zu reduzieren, untersucht. Es wurde eine Elektrolysezelle aufgebaut, um die Elektrodeneigenschaften der AgNW-Strukturen mit Hilfe eines Potentiostaten der Firma Autolab zu bestimmen. Es wurde mit folgendem Messaufbau gearbeitet: eine Platinelektrode diente als Gegenelektrode (Anode - Bildung von Sauerstoff); an der Arbeitselektrode (polykristallines Silberblech) wurde der AgNW-Katalysator (mit Hilfe von Silberleitlack) aufgebracht (Kathode - Reduktion von $CO_2$ zu CO); als Referenzelektrode wurde eine Ag/AgCl-Elektrode verwendet (zur Bestimmung der Überspannung der Kathodenreaktion) und als Elektrolyt wurde eine $CO_2$-gesättigte 0,5 M $KHCO_3$-Lösung (pH 7,2) verwendet. Die AgNW-Strukturen wurden mittels Cyclovoltammetrie mit einer polykristallinen Silberoberfläche ohne AgNW-Struktur und mit nanoporösem Silber (Lu,Q., et al., Nature Communications, 5, 2014, S. 3242ff.) verglichen (Figur 7). Gute CO-Selektivitäten (ca. 92 %) werden mit Silberkatalysatoren im Überspannungsbereich zum Standard-Elektrodenpotential der $CO_2$-Zersetzung (-0,11 V vs. RHE) zwischen -0,35 V bis -0,7 V erzielt. Bei Spannungen negativer als -0,8 V vs. RHE beginnt laut Literatur eine vermehrte Wasserstoffproduktion. Beim Vergleich der Stromdichten von einer polykristallinen Silberoberfläche mit der von den AgNW-Strukturen wird bei einer Überspannung von ca. -0,55 V eine ca. 65-fach höhere Stromdichte mit den AgNW-Strukturen erzielt als mit der polykristallinen Silberoberfläche. Nanoporöses Silber erzielt im interessanten Überspannungsbereich (-0,55 V) leicht bessere Stromdichten (-24,5 mA/cm$^2$) als die getesteten AgNW-Strukturen (-20 mA/cm$^2$). Wird allerdings die Materialeffizienz des Katalysators mitbetrachtet, werden mit den AgNW-Strukturen wesentlich bessere spezifische Materialstromdichten als mit dem nanoporösem Silber erzielt. Beim nanoporösem Silber werden die -24,5 mA/cm$^2$ (entspricht bei einer 92 %-igen CO-Selektivität einer partiellen CO-Stromdichte von 22,5 mA/cm$^2$) mit 40 mg Silber pro cm$^2$ erzielt, was einer spezifischen Materialstromdichte für CO von ca. 563 mA/g(Ag) entspricht. Die -20 mA/cm$^2$ bei den AgNW-Strukturen wurden mit einer Silbermenge von 5 mg erzielt (entspricht einer partiellen CO-Stromdichte von 18,4 mA/cm$^2$), was wiederum einer spezifischen Materialstromdichte für CO von ca. 3680 mA/g(Ag) entspricht. Die AgNW-Strukturen weisen damit eine um 6,5fach höhere spezifische Materialstromdichte als der beste bekannte Silberkatalysator aus dem Stand der Technik auf.

**Beispiel 32: Herstellung 3-D Metallnanodrahtstruktur aus NiAgNW**

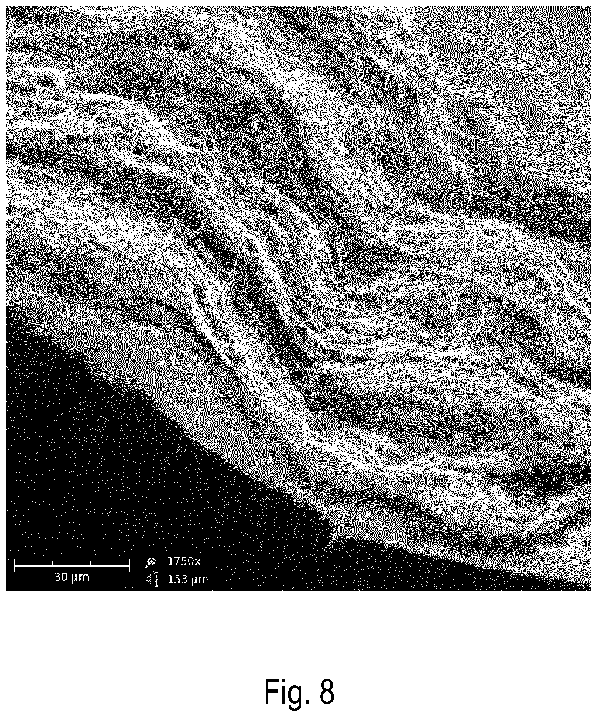

Zu 50 g des AgNW Konzentrates aus Beispiel 27 (1,5 g Ag) werden 1,1 L Ethylenglykol und 195 mL einer 0,1 M Nickelnitrat-Lösung (1,15 g Ni) gegeben. Anschließend wird die homogene Suspension mit 87,8 mL Hydraziniumhydroxid ($N_2H_4xH_2O$) versetzt. Die Lösung wird auf einer Heizplatte unter gelindem Rühren auf 110 °C erhitzt und anschließend wird die Reaktionslösung ohne Rühren für ca. 15 Minuten bei 110 °C temperiert. Nach Abschluss der Reaktion hat sich eine hoch poröse, schwarze NiAgNW-Struktur gebildet, welche von der Festigkeit und Form denen aus Beispiel 28 ähnelt. Die restliche Reaktionslösung ist weitestgehend klar und farblos. Nach Abkühlen der Reaktionslösung wird die NiAgNW-Struktur mehrmals mit entionisiertem Wasser gewaschen und anschließend auf einer Heizplatte getrocknet. Die Struktur wurde mittels REM untersucht (siehe Figur 8). Die AgNW wurden mit einer ca. 10 nm dicken Nickelschicht beschichtet. Die NiAgNWs liegen im Inneren der Struktur ungeordnet im Raum verteilt vor. Lediglich an den äußeren Grenzflächen sind die NWs größtenteils flach angeordnet. Eine Bestimmung der Dichte ergibt einen Wert von 0,149 g/cm$^3$. Zusammen mit dem REM Befund und der Dichte von reinem Silber und reinem Nickel lässt sich daraus der Metallvolumenanteil zu 1,5 % bestimmen. Der elektrische Widerstand eines trockenen Stückes dieses Netzwerkes mit etwa 10 x 10 x 0,5 mm$^3$ beträgt ca. 40 Ohm. Die Struktur ist mechanisch weitgehend beständig. Trotz des hohen Porenanteils kann sie trocken zerstörungsfrei manipuliert werden. Wird sie auf einer Fritte mit Wasser durchspült, verliert sie ebenfalls nicht ihren Zusammenhalt. Der Austrag einzelner NiAgNWs kann visuell nicht beobachtet werden.

**Beispiel 33: Alternative Herstellung 3-D Metallnanodrahtstruktur aus NiAgNW**

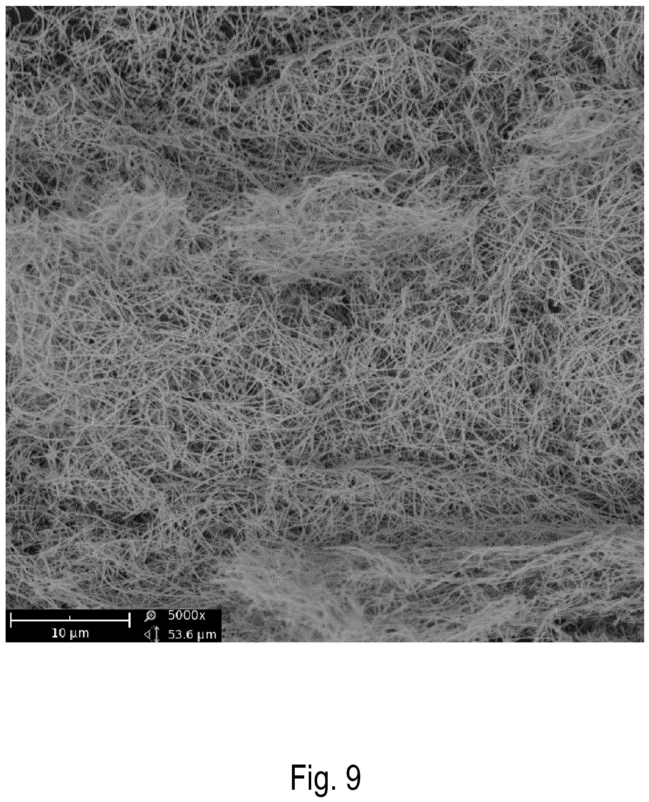

Eine analog Beispiel 28 hergestellte aber nicht getrocknete AgNW-Struktur (1,5 g Ag) wird in einem Becherglas mit 195 mL einer 0,1 M Nickelnitrat-Lösung (1,15 g Ni) in Ethylenglykol versetzt und vollständig mit Ethylenglykol bedeckt. Anschließend werden 87,8 mL Hydraziniumhydroxid ($N_2H_4xH_2O$) zugegeben. Die Lösung wird auf einer Heizplatte ohne Rühren auf 110 °C erhitzt und anschließend für ca. 15 Minuten bei dieser Temperatur belassen. Nach Abschluss der Reaktion hat sich die AgNW-Struktur schwarz verfärbt. Die restliche Reaktionslösung ist weitestgehend klar und farblos. Die hoch poröse, schwarze NiAgNW-Struktur wird nach Abkühlen der Reaktionslösung mehrmals mit entionisiertem Wasser gewaschen und anschließend auf einer Heizplatte oder gefriergetrocknet. Die Struktur wurde mittels REM untersucht (siehe Figur 9). Die AgNW wurden mit einer ca. 10 nm dicken Nickelschicht beschichtet. Von der Struktur und Art des Netzwerkes unterscheidet sich diese Art der NiAgNW-Netzwerkes nicht von denen aus Beispiel 28 bzw. Beispiel 30. Die NiAgNWs liegen im Inneren der Struktur ungeordnet im Raum verteilt vor. Lediglich an den äußeren Grenzflächen sind die NWs größtenteils flach angeordnet. Eine Bestimmung der Dichte ergibt einen Wert von 0,104 g/cm$^3$ Zusammen mit dem REM Befund und der Dichte von reinem Silber und reinem Nickel lässt sich daraus der Metallvolumenanteil zu 1,1 % bestimmen. Der elektrische Widerstand eines trockenen Stückes dieses Netzwerkes mit etwa 10 x 10 x 0,5 mm$^3$ beträgt ca. 1 Ohm. Die Struktur ist mechanisch weitgehend beständig. Trotz des hohen Porenanteils kann sie trocken zerstörungsfrei manipuliert werden. Wird sie auf einer Fritte mit Wasser durchspült, verliert sie ebenfalls nicht ihren Zusammenhalt. Der Austrag einzelner NiAgNWs kann visuell nicht beobachtet werden.

**Beispiel 34: Herstellung 3-D Metallnanodrahtstruktur aus CoAgNW**

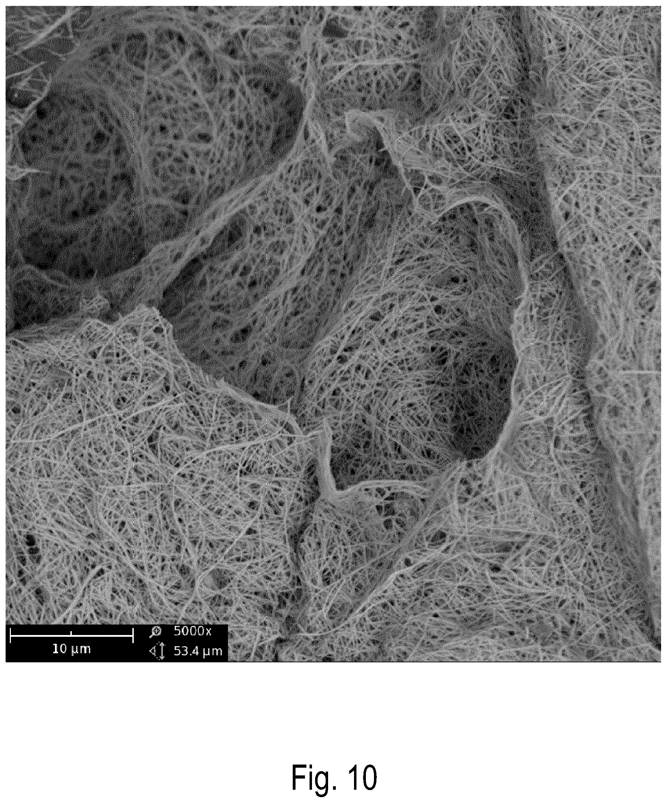

Zu 50 g des AgNW Konzentrates aus Beispiel 27 (1,5 g Ag) werden 1,1 L Ethylenglykol und 195 mL einer 0,1 M Cobaltnitrat-Lösung (1,15 g Co) gegeben. Anschließend wird die homogene Suspension mit 87,8 mL Hydraziniumhydroxid ($N_2H_4xH_2O$) versetzt. Die Lösung wird auf einer Heizplatte unter gelindem Rühren auf 110 °C erhitzt und anschließend wird die Reaktionslösung ohne Rühren für ca. 15 Minuten bei 110 °C temperiert. Nach Abschluss der Reaktion hat sich eine hoch poröse, schwarze CoAgNW-Struktur gebildet, welche von der Festigkeit und Form denen aus Beispiel 24 ähnelt. Die restliche Reaktionslösung ist weitestgehend klar und farblos. Nach Abkühlen der Reaktionslösung wird die CoAgNW-Struktur mehrmals mit entionisiertem Wasser gewaschen und anschließend auf einer Heizplatte oder gefriergetrocknet. Die Struktur wurde mittels REM untersucht (siehe Figur 10). Die AgNW wurden mit einer ca. 10 nm dicken Cobaltschicht beschichtet. Die CoAgNWs liegen im Inneren der Struktur ungeordnet im Raum verteilt vor. Lediglich an den äußeren Grenzflächen sind die NWs größtenteils flach angeordnet. Eine Bestimmung der Dichte ergibt einen Wert von 0,138 g/cm$^3$. Zusammen mit dem REM Befund und der Dichte von reinem Silber und reinem Cobalt lässt sich daraus der Metallvolumenanteil zu 1,4 % bestimmen. Der elektrische Widerstand eines trockenen Stückes dieses Netzwerkes mit etwa 10 x 10 x 0,5 mm$^3$ beträgt ca. 80 Ohm. Die Struktur ist mechanisch weitgehend beständig. Trotz des hohen Porenanteils kann sie trocken zerstörungsfrei manipuliert werden. Wird sie auf einer Fritte mit Wasser durchspült, verliert sie ebenfalls nicht ihren Zusammenhalt. Der Austrag einzelner CoAgNWs kann visuell nicht beobachtet werden.

**Beispiel 35: Alternative Herstellung 3-D Metallnanodrahtstruktur aus CoAgNW**

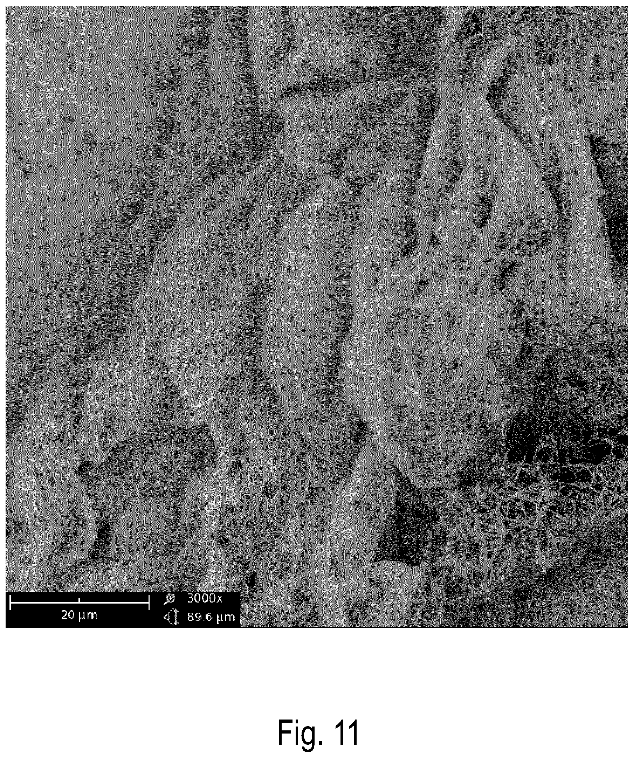

Eine aus Beispiel 28 hergestellte aber nicht getrocknete AgNW-Struktur (1,5 g Ag) wird in einem Becherglas mit 195 mL einer 0,1 M Cobaltnitrat-Lösung (1,15 g Co) in Ethylenglykol versetzt und vollständig mit Ethylenglykol bedeckt. Anschließend werden 87,8 mL Hydraziniumhydroxid ($N_2H_4xH_2O$) zugegeben. Die Lösung wird auf einer Heizplatte ohne Rühren auf 110 °C erhitzt und anschließend für ca. 15 Minuten bei dieser Temperatur belassen. Nach Abschluss der Reaktion hat sich die AgNW-Struktur schwarz verfärbt. Die restliche Reaktionslösung ist weitestgehend klar und farblos. Die hoch poröse, schwarze CoAgNW-Struktur wird nach Abkühlen der Reaktionslösung mehrmals mit entionisiertem Wasser gewaschen und anschließend auf einer Heizplatte oder gefriergetrocknet. Die Struktur wurde mittels REM untersucht (siehe Figur 11). Die AgNW wurden mit einer ca. 10 nm dicken Cobaltschicht beschichtet. Von der Struktur und Art des Netzwerkes unterscheidet sich diese Art der CoAgNW-Netzwerkes nicht von denen aus Beispiel 28 bzw. Beispiel 34. Die CoAgNWs liegen im Inneren der Struktur ungeordnet im Raum verteilt vor. Lediglich an den äußeren Grenzflächen sind die NWs größtenteils flach angeordnet. Eine Bestimmung der Dichte ergibt einen Wert von

0,107 g/cm$^3$. Zusammen mit dem REM Befund und der Dichte von reinem Silber und reinem Cobalt lässt sich daraus der Metallvolumenanteil zu 1,1 % bestimmen. Der elektrische Widerstand eines trockenen Stückes dieses Netzwerkes mit etwa 10 x 10 x 0,5 mm$^3$ beträgt ca. 2-3 Ohm. Die Struktur ist mechanisch weitgehend beständig. Trotz des hohen Porenanteils kann sie trocken zerstörungsfrei manipuliert werden. Wird sie auf einer Fritte mit Wasser durchspült, verliert sie ebenfalls nicht ihren Zusammenhalt. Der Austrag einzelner CoAgNWs kann visuell nicht beobachtet werden.

**Beispiel 36: Mikrowellensynthese AgNW-Gerüststruktur**

In einem Rollrandglas wurden 1,34 g Konzentrat gemäß Beispiel 2 (40 mg AgNWs) in 10,0 g Wasser homogen dispergiert. Anschließend wurden 0,6 g Ethanolamin zugetropft und durch Schütteln homogen verteilt. Dem Rollrandglas wurde ein perforierter Deckel aufgesetzt und anschließend in einem Mikrowellenofen für 2 min bei 300 W Leistung zum Sieden erhitzt. Nach etwa 2 Minuten bildete sich in der gesamten flüssigen Phase eine metallisch graue schwammartige Struktur aus. Es verbleibt eine geringe Menge klarer flüssiger Phase, die offensichtlich arm an AgNWs ist. Nach ca. 5 Minuten war die Ausbildung der Struktur vollständig. Die Struktur wurde mehrmals mit entionisiertem Wasser gewaschen und anschließend auf einer Heizplatte bei 100 °C für 2 h getrocknet. Es verbleibt eine elastische, mechanisch stabile hochporöse 3-dimensionale Schwammstruktur. Mit einem Multimeter wurde der elektrische Widerstand der Metallstruktur mit einem Messspitzenabstand von ca. 1 cm zu 0,4 Ohm bestimmt. Rasterelektronenmikroskopaufnahmen dieser Strukturen ähneln denen der bereits gezeigten Beispiele 28 und 30. Die Strukturen bilden ein hochporöses dreidimensionales Netzwerk. Weiterhin ist ersichtlich, dass wie in Beispiel 30 an den Kontaktflächen der Drähte sich metallische Verdickungen ausgebildet haben, die zu einem verbesserten interstrukturellen Kontakt des Gerüstes führt und folglich die Leitfähigkeit und die mechanische Festigkeit erhöhen. Die einzelnen Drähte sind chemisch verschweißt. Die getrockneten Strukturen wurden über Nacht in Wasser gelagert: visuell konnte keine Veränderung der Struktur festgestellt werden; die Elastizität und Festigkeit waren unverändert.

**Beispiel 37: Beschichtung einer PEM mit AgNW-Gerüststruktur**

Auf $5 \times 5$ cm$^2$ einer Polymerelektrolytmembran (fumapem F-9240), welche mit 1 % $H_2SO_4$ und entionisiertem Wasser vorbehandelt wurde, wird mit einer Mayer-Rod-Handrakel eine 400 $\mu$m Nassfilmdicke des AgNW Konzentrates aus Beispiel 27 aufgetragen. Anschließend wird diese Beschichtung mit einer 5 Gew.%-igen NaOH-Lösung überschichtet. Nach einer Minute wird die NaOH-Lösung mit entionisiertem Wasser abgespült und mehrmals gewaschen. Durch die Laugenbehandlung hat sich eine waschstabile AgNW-Beschichtung gebildet, aus welcher augenscheinlich keine AgNWs durch das Waschen herausgelöst werden. Anschließend wird die Membran mit der Beschichtung auf einer Heizplatte bei 80 °C für 2 Stunden getrocknet. Mit einem Multimeter wurde der elektrische Widerstand der Metallstruktur mit einem Messspitzenabstand von ca. 1 cm zu etwa 100 Ohm bestimmt. Die Struktur wurde mittels REM untersucht. Von der Struktur und Art des Netzwerkes unterscheidet sich diese Art des AgNW-Netzwerkes nicht von denen aus Beispiel 28 oder 30. Die AgNWs liegen im Inneren der Struktur ungeordnet im Raum verteilt vor. Es hat sich eine ca. 50 $\mu$m dicke, dreidimensionale AgNW-Gerüststruktur ausgebildet, welche mechanisch weitgehend beständig ist und mit Wasser durchspült werden kann, ohne dass sie ihren Zusammenhalt verliert.

**Patentansprüche**

1. Metallnanopartikelhaltige, disperse Formulierung zur Herstellung einer leitfähigen Schicht, wobei die Formulierung Metallnanopartikel, Polyvinylpyrrolidon, zumindest ein die Metallnanopartikel und das Polyvinylpyrrolidon dispergierendes Lösungsmittel und zumindest ein Adsorptiv umfasst, wobei das Adsorptiv ausgewählt ist aus der Gruppe bestehend aus Ammoniak, primäre, sekundäre und tertiäre Amine und Aminoalkohole, wobei das Adsorptiv, bezogen auf das Gewicht der gesamten Formulierung, in einem Anteil von 0,1 Gew.% bis 5 Gew.% enthalten ist.

2. Metallnanopartikelhaltige, disperse Formulierung nach Anspruch 1, **dadurch gekennzeichnet, dass** das Adsorptiv, bezogen auf das Gewicht der gesamten Formulierung, in einem Anteil von 0,5 Gew.% bis 2 Gew.%, bevorzugt in einem Anteil von rund 1,3 Gew.% enthalten ist.

3. Metallnanopartikelhaltige, disperse Formulierung nach Anspruch 1 oder 2, **dadurch gekennzeichnet, dass** es sich bei dem Adsorptiv um Ethanolamin handelt.

4. Metallnanopartikelhaltige, disperse Formulierung nach einem der Ansprüche 1 bis 3, **dadurch gekennzeichnet, dass** Polyvinylpyrrolidon und Metallnanopartikel in einem Gewichtsverhältnis Polyvinylpyrrolidon zu Metallnanopartikel von 0,5 bis 10, bevorzugt in einem Gewichtsverhältnis von 1 bis 5, enthalten sind.

5. Verfahren zur Herstellung einer metallnanopartikelhaltigen, dispersen Formulierung umfassend die Schritte

    a) Bereitstellen einer aus einem Polyolprozess erhaltenen Mischung, wobei die Mischung zumindest ein Polyol, Polyvinylpyrrolidon und Metallnanopartikel umfasst,
    b) Zugabe zumindest eines Adsorptivs, wobei das Adsorptiv ausgewählt ist aus der Gruppe bestehend aus Ammoniak, primäre, sekundäre und tertiäre Amine und Aminoalkohole, wobei das Adsorptiv, bezogen auf das Gewicht der gesamten Formulierung, in einem Anteil von 0,1 Gew.% bis 5 Gew.% zugegeben wird.

6. Verfahren nach Anspruch 5, wobei nach Schritt a) und vor Schritt b) die Schritte a1

    ) Zugabe eines mit dem zumindest einen Polyol im Wesentlichen unmischbaren Lösungsmittels zu der in Schritt a) bereitgestellten Mischung,
    a2) Abtrennen des durch Phasentrennung entstandenen Konzentrats an Polyvinylpyrrolidon und Metallnanopartikel,
    a3) Zugabe zumindest eines die Metallnanopartikel und das Polyvinylpyrrolidon dispergierenden Lösungsmittels zu dem in Schritt a2) abgetrennten Konzentrat durchgeführt werden, wobei die Zugabe des zumindest einen Adsorptivs in Schritt b) zu der in Schritt a3) erhaltenen, metallnanopartikelhaltigen, dispersen Formulierung erfolgt.

7. Verfahren nach Anspruch 5 oder 6, wobei in Schritt b) das Adsorptiv, bezogen auf das Gewicht der gesamten Formulierung, in einem Anteil von 0,5 Gew.% bis 2 Gew.%, bevorzugt rund 1,3 Gew.% zugegeben wird.

8. Verfahren nach einem der Ansprüche 5 bis 7, wobei in Schritt b) Ethanolamin als Adsorptiv zugegeben wird.

9. Verfahren nach einem der Ansprüche 5 bis 8, **dadurch gekennzeichnet, dass** die in Schritt a) bereitgestellte Mischung Polyvinylpyrrolidon und Metallnanopartikel in einem Gewichtsverhältnis Polyvinylpyrrolidon zu Metallnanopartikel von 0,5 bis 10, bevorzugt in einem Gewichtsverhältnis Polyvinylpyrrolidon zu Metallnanopartikel von 1 bis 5 enthält.

10. Verfahren nach einem der Ansprüche 6 bis 9, **dadurch gekennzeichnet, dass** es sich bei dem in Schritt a1) zugegebenen, mit dem zumindest einen Polyol im Wesentlichen unmischbaren Lösungsmittel um ein Keton, einen Carbonsäureester, eine Carbonsäure oder deren Mischungen, bevorzugt um Aceton, Essigsäureethylester oder Heptansäure handelt.

11. Verfahren zur Herstellung einer leitfähigen Schicht umfassend die Schritte

    a) Bereitstellen einer metallnanopartikelhaltigen, dispersen Formulierung, wobei die Formulierung Metallnanopartikel, Polyvinylpyrrolidon, zumindest ein die Metallnanopartikel und das Polyvinylpyrrolidon dispergierendes Lösungsmittel und zumindest ein Adsorptiv umfasst, wobei das Adsorptiv ausgewählt ist aus der Gruppe bestehend aus Ammoniak, primäre, sekundäre und tertiäre Amine und Aminoalkohole, wobei das Adsorptiv, bezogen auf das Gewicht der gesamten Formulierung, in der metallnanopartikelhaltigen, dispersen Formulierung in einem Anteil von 0,1 Gew.% bis 5 Gew.% enthalten ist,
    b) Trocknen der metallnanopartikelhaltigen, dispersen Formulierung derart, dass das die Metallnanopartikel und das Polyvinylpyrrolidon dispergierende Lösungsmittel im Wesentlichen vollständig entfernt wird.

12. Verfahren nach Anspruch 11, wobei das Trocknen in Schritt b) bei erhöhter Temperatur erfolgt,
wobei in Schritt b) die Temperatur bevorzugt auf 100°C bis 160°C, besonders bevorzugt auf 120°C bis 160°C, insbesondere bevorzugt auf 140°C bis 150°C, erhöht wird,
und/oder
wobei in Schritt b) die Temperatur bevorzugt für einen Zeitraum von 1 min. bis 20 min., besonders bevorzugt für einen Zeitraum von 1 min. bis 3 min., erhöht wird.

13. Verfahren nach Anspruch 11 oder 12, wobei nach Schritt a) und vor Schritt b) der Schritt
a1) Aufbringen der Formulierung auf ein Substrat
durchgeführt wird.

14. Verfahren nach einem der Ansprüche 11 bis 13, wobei das Adsorptiv, bezogen auf das Gewicht der gesamten Formulierung, in der metallnanopartikelhaltigen, dispersen Formulierung in einem Anteil von 0,5 Gew.% bis 2 Gew.%,

bevorzugt in einem Anteil von rund 1,3 Gew.% enthalten ist.

15. Verfahren nach einem der Ansprüche 11 bis 14, wobei es sich bei dem Adsorptiv in der metallnanopartikelhaltigen, dispersen Formulierung um Ethanolamin handelt.

16. Verfahren nach einem der Ansprüche 11 bis 15, **dadurch gekennzeichnet, dass** die in Schritt a) bereitgestellte metallnanopartikelhaltige, disperse Formulierung Polyvinylpyrrolidon und Metallnanopartikel in einem Gewichtsverhältnis Polyvinylpyrrolidon zu Metallnanopartikel von 0,5 bis 10, bevorzugt in einem Gewichtsverhältnis Polyvinylpyrrolidon zu Metallnanopartikel von 1 bis 5, enthält.

**Claims**

1. A disperse formulation containing metal nanoparticles for producing a conductive layer, wherein the formulation comprises metal nanoparticles, polyvinylpyrrolidone, at least one solvent that disperses the metal nanoparticles and the polyvinylpyrrolidone and at least one adsorbate, wherein the adsorbate is selected from the group consisting of ammonia, primary, secondary and tertiary amines and amino alcohols, wherein the adsorbate is present in an amount of 0.1 % by weight to 5 % by weight, based on the weight of the total formulation.

2. The disperse formulation containing metal nanoparticles according to claim 1, **characterized in that** the adsorbate is present in an amount of 0.5 % by weight to 2 % by weight, preferably in an amount of approximately 1.3 % by weight, based on the weight of the total formulation.

3. The disperse formulation containing metal nanoparticles according to claim 1 or 2, **characterized in that** the adsorbate is ethanolamine.

4. The disperse formulation containing metal nanoparticles according to any one of claims 1 to 3, **characterized in that** polyvinylpyrrolidone and metal nanoparticles are present in a weight ratio of polyvinylpyrrolidone to metal nanoparticles of 0.5 to 10, preferably in a weight ratio of 1 to 5.

5. A method for producing a disperse formulation containing metal nanoparticles, comprising the steps:

   a) providing a mixture obtained from a polyol process, wherein the mixture includes at least a polyol, polyvinylpyrrolidone and metal nanoparticles,
   b) adding at least an adsorbate, wherein the adsorbate is selected from a group consisting of ammonia, primary, secondary and tertiary amines and amino alcohols, wherein the adsorbate is added in an amount of 0.1 % by weight to 5 % by weight, based on the weight of the total formulation.

6. The method according to claim 5, wherein the following steps are carried out after step a) and before step b):

   a1) adding a solvent to the mixture provided in step a), wherein the solvent is essentially immiscible with the at least one polyol,
   a2) separating the concentrate of polyvinylpyrrolidone and metal nanoparticles obtained by phase separation,
   a3) adding at least a solvent that disperses the metal nanoparticles and the polyvinylpyrrolidone to the concentrate separated in step a2),

   wherein the at least one adsorbate in step b) is added to the disperse formulation containing metal nanoparticles obtained in step a3).

7. The method according to claim 5 or 6, wherein the adsorbate is added in step b) in an amount of 0.5 % by weight to 2 % by weight, preferably approximately 1.3 % by weight, based on the weight of the total formulation.

8. The method according to any one of claims 5 to 7, wherein ethanolamine is added as the adsorbate in step b).

9. The method according to any one of claims 5 to 8, **characterized in that** the mixture provided in step a) contains polyvinylpyrrolidone and metal nanoparticles in a weight ratio of polyvinylpyrrolidone to metal nanoparticles of 0.5 to 10, preferably in a weight ratio of polyvinylpyrrolidone to metal nanoparticles of 1 to 5.

**10.** The method according to any one of claims 6 to 9, **characterized in that** the solvent essentially not miscible with the at least one polyol and added in step a1) is a ketone, a carboxylic acid ester, a carboxylic acid or mixtures thereof, preferably acetone, ethyl acetate or heptanoic acid.

**11.** A method for producing a conductive layer comprising the steps of:

a) providing a disperse formulation containing metal nanoparticles, wherein the formulation comprises metal nanoparticles, polyvinylpyrrolidone, at least a solvent that disperses the metal nanoparticles and the polyvinylpyrrolidone, and at least an adsorbate, wherein the adsorbate is selected from the group consisting of ammonia, primary, secondary and tertiary amines and amino alcohols, wherein the adsorbate is present in the disperse formulation containing metal nanoparticles in an amount of 0.1 % by weight to 5 % by weight, based on the weight of the total formulation,
b) drying the disperse formulation containing the metal nanoparticles such that the solvent dispersing the metal nanoparticles and the polyvinylpyrrolidone is removed essentially completely.

**12.** The method according to claim 11, wherein the drying in step b) is carried out at an elevated temperature, wherein the temperature in step b) is preferably raised to 100 °C to 160 °C, especially preferably to 120 °C to 160 °C, in particular preferably to 140 °C to 150 °C,
and/or
wherein the temperature in step b) is preferably increased for a period of time from 1 minute to 20 minutes, especially preferably for a period of time of 1 minute to 3 minutes.

**13.** The method according to claim 11 or 12, wherein the following step is carried out after step a) and before step b):
a1) applying the formulation to a substrate.

**14.** The method according to any one of claims 11 to 13, wherein the adsorbate is present in an amount of 0.5 % by weight to 2 % by weight in the disperse formulation containing metal nanoparticles, preferably in an amount of approximately 1.3 % by weight, based on the weight of the total formulation.

**15.** The method according to any one of claims 11 to 14, wherein the adsorbate in the disperse formulation containing metal nanoparticles is ethanolamine.

**16.** The method according to any one of claims 11 to 15, **characterized in that** the disperse formulation containing metal nanoparticles prepared in step a) contains polyvinylpyrrolidone and metal nanoparticles in a weight ratio of polyvinylpyrrolidone to metal nanoparticles of 0.5 to 10, preferably in a weight ratio of polyvinylpyrrolidone to metal nanoparticles of 1 to 5.

**Revendications**

**1.** Formulation de dispersion contenant des nanoparticules métalliques, destinée à fabriquer une couche conductrice, la formulation comprenant des nanoparticules métalliques, de la polyvinylpyrrolidone, au moins un solvant dispersant les nanoparticules métalliques et la polyvinylpyrrolidone et au moins un adsorbant, l'adsorbant étant sélectionné dans le groupe comprenant l'ammoniac, les amines primaires, secondaires et tertiaires et les alcools aminés, l'adsorbant étant contenu dans une part de 0,1 % en poids à 5 % en poids en rapport au poids de la formulation totale.

**2.** Formulation de dispersion contenant des nanoparticules métalliques selon la revendication 1, **caractérisé en ce que** l'adsorbant est contenu dans une part de 0,5 % en poids à 2 % en poids, de préférence dans une part de près de 1,3 % en poids en rapport au poids de la formulation totale.

**3.** Formulation de dispersion contenant des nanoparticules métalliques selon la revendication 1 ou 2, **caractérisé en ce que** l'adsorbant est une éthanolamine.

**4.** Formulation de dispersion contenant des nanoparticules métalliques selon l'une quelconque des revendications 1 à 3, **caractérisé en ce que** la polyvinylpyrrolidone et les nanoparticules métalliques sont contenues dans un rapport en poids de la polyvinylpyrrolidone aux nanoparticules métalliques de 0,5 à 10, de préférence dans un rapport en poids de von 1 à 5.

5. Procédé de préparation d'une formulation de dispersion contenant des nanoparticules métalliques, comprenant les étapes

    a) mettre à disposition un mélange obtenu à partir d'un procédé de polyols, le mélange comprenant au moins un polyol, de la polyvinylpyrrolidone et des nanoparticules métalliques,
    b) ajouter au moins un adsorbant, l'adsorbant étant sélectionné dans le groupe comprenant l'ammoniac, les amines primaires, secondaires et tertiaires et les alcools aminés, l'adsorbant étant contenu dans une part de 0,1 % en poids à 5 % en poids en rapport au poids de la formulation totale.

6. Procédé selon la revendication 5, dans lequel après l'étape a) et avant l'étape b) est réalisées les étapes

    a1) ajouter au mélange mis à disposition dans l'étape a) un solvant sensiblement non miscible avec l'au moins un polyol,
    a2) séparer le concentré de polyvinylpyrrolidone et de nanoparticules métalliques produit par une séparation de phases,
    a3) ajouter au moins un solvant qui met en dispersion les nanoparticules métalliques et la polyvinylpyrrolidone au concentré séparé dans l'etappe a2),

dans lequel l'au moins un adsorbant est ajouté dans l'étape b) à la formule de dispersion contenant des nanoparticules obtenues dans l'étape a3).

7. Procédé selon la revendication 5 ou 6, dans lequel dans l'étape b), l'adsorbant est ajouté dans une part de 0,5 % en poids à 2 % en poids, de préférence d'environ 1,3 % en poids, en rapport au poids de la formulation totale.

8. Procédé selon l'une quelconque des revendications 5 à 7, dans lequel dans l'étape b) de l'éthanolamine est ajoutée en tant qu'adsorbant.

9. Procédé selon l'une quelconque des revendications 5 à 8, **caractérisé en ce que** le mélange mis à disposition dans l'étape a) contient de la polyvinylpyrrolidone et des nanoparticules métalliques dans un rapport en poids de la polyvinylpyrrolidone aux nanoparticules métalliques de 0,5 à 10, de préférence dans un rapport en poids de la polyvinylpyrrolidone aux nanoparticules métalliques de 1 à 5.

10. Procédé selon l'une quelconque des revendications 6 à 9, **caractérisé en ce que** le solvant ajouté dans l'étape al), sensiblement non miscible avec l'au moins un polyol est une cétone, un ester d'acide carboxylique, un acide carboxylique ou leurs mélanges, de préférence de l'acétone, de l'acétate d'éthyle ou de l'acide heptanoïque.

11. Procédé, destiné à fabriquer une couche conductrice, comprenant les étapes consistant à

    a) mettre à disposition une formulation de dispersion contenant des nanoparticules métalliques, la formulation comprenant des nanoparticules métalliques, de la polyvinylpyrrolidone, au moins un solvant dispersant les nanoparticules métalliques et la polyvinylpyrrolidone et au moins un adsorbant, l'adsorbant étant sélectionné dans le groupe comprenant l'ammoniac, les amines primaires, secondaires et tertiaires et les alcools aminés, l'adsorbant étant contenu dans une part de 0,1 % en poids à 5 % en poids en rapport au poids de la formulation totale,
    b) sécher la formulation de dispersion contenant des nanoparticules métalliques de telle sorte que le solvant mettant en dispersion les nanoparticules métalliques et la polyvinylpyrrolidone soient éliminés de manière sensiblement totale.

12. Procédé selon la revendication 11, le séchage dans l'étape b) s'effectuant à température élevée,
dans l'étape b) la température étant relevée à de 100 °C à 160 °C, de manière particulièrement préférentielle à de 120 °C à 160 °C, de manière plus particulièrement préférentielle à de 140 °C à 150 °C,
et/ou
dans l'étape b) la température étant relevée de préférence pour une période de 1 minute à 20 minutes, de manière particulièrement préférentielle pour une période de 1 minute à 3 minutes.

13. Procédé selon la revendication 11 ou 12, après l'étape a) et avant l'étape b) étant réalisée l'étape
a1) appliquer la formulation sur un substrat.

**14.** Procédé selon l'une quelconque des revendications 11 à 13, l'adsorbant étant contenu dans la formulation de dispersion contenant des nanoparticules métalliques dans un rapport de 0,5 % en poids à 2 % en poids, en rapport au poids de la formulation totale, de préférence dans une part de près de 1,3 % en poids.

**15.** Procédé selon l'une quelconque des revendications 11 à 14, l'adsorbant dans la formulation de dispersion contenant des nanoparticules métalliques étant une éthanolamine.

**16.** Procédé selon l'une quelconque des revendications 11 à 15, **caractérisé en ce que** la formulation de dispersion contenant des nanoparticules métalliques contient de la polyvinylpyrrolidone et des nanoparticules métalliques dans un rapport au poids de la polyvinylpyrrolidone aux nanoparticules métalliques de 0,5 à 10, de préférence dans un rapport au poids de la polyvinylpyrrolidone aux nanoparticules métalliques de 1 à 5.

Fig. 1A

Fig. 1B

Fig. 2

Fig. 3A

Fig. 3B

Fig. 4

Fig. 5

Fig. 6A

Fig. 6B

Fig. 7

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4023287 C2
- EP 2064512 B1
- EP 1365206 B1
- EP 1914505 B1
- US 7585349 B2
- US 7922787 B2
- US 8709125 B2
- DE 102010017706 B4

- WO 2014127909 A1
- US 8049333 B2
- WO 2007061945 A2
- WO 2007100811 A2
- WO 2012064768 A2
- WO 2013103420 A2
- KR 102013055920 A
- DE 69832537 T2

**In der Beschreibung aufgeführte Nicht-Patentliteratur**

- **JOST, K. ; PEREZ, C. R. ; MCDONOUGH, J. K. ; PRESSER, V. ; HEON, M. ; DION, G. ; GOGOTSI, Y.** Carbon coated textiles for flexible energy storage. *Energy & Environmental Science,* 2011, vol. 4 (12), 5060
- **HECHT, D. S. ; HU, L. ; GRÜNER, G.** Electronic properties of carbon nanotube/fabric composites. *Current Applied Physics,* 2007, vol. 1, 60-63
- **DING, Y. ; INVERNALE, M. A ; SOTZING, G. A.** Conductivity trends of PEDOT-PSS impregnated fabric and the effect of conductivity on electrochromic textile. *ACS Applied Materials & Interfaces,* 2010, vol. 2 (6), 1588-93
- **GUO, F. ; ZHU, X. ; FORBERICH, K. ; KRANTZ, J. ; STUBHAN, T. ; SALINAS, M. ; BRABEC, C. J.** ITO-Free and Fully Solution-Processed Semitransparent Organic Solar Cells with High Fill Factors. *Advanced Energy Materials,* 2013, vol. 3 (8), 1062-1067
- **SUN, Y. ; YIN, Y. ; MAYERS, B. T. ; HERRICKS, T. ; XIA, Y.** Uniform Silver Nanowires Synthesis by Reducing AgNO3 with Ethylene Glycol in the Presence of Seeds and Poly (Vinyl Pyrrolidone). *Chemistry of Materials,* 2002, vol. 14 (11), 4736-4745

- **CASWELL, K. K. ; BENDER, C. M. ; MURPHY, C. J. ; CAROLINA, S.** Seedless, Surfactantless Wet Chemical Synthesis of Silver Nanowires. *Nano,* 2003, vol. 35, 3-5
- **HU, L. ; KIM, H. S. ; LEE, J.-Y. ; PEUMANS, P. ; CUI, Y.** Scalable coating and properties of transparent, flexible, silver nanowire electrodes. *ACS Nano,* 2010, vol. 4 (5), 2955-63
- **JARRETT, R. ; CROOK, R.** The Separation of Silver Nanowires from Solution Using a Novel Filtration Technique - A Comparative Study. *PVSAT 9 Conference Proceedings.,* 2013, 2-5
- **PRADEL, K. C. ; SOHN, K. ; HUANG, J.** Cross-flow purification of nanowires. *Angewandte Chemie (International Ed. in English),* 2011, vol. 50 (15), 3412-6
- **SCHOEN, D. T. ; SCHOEN, A. P. ; HU, L. ; KIM, H. S. ; HEILSHORN, S. C. ; CUI, Y.** High speed water sterilization using onedimensional nanostructures. *Nano Letters,* 2010, vol. 10 (9), 3628-32
- **LU et al.** *Nature Communications,* 2014, vol. 5, 3242ff
- **ZUOFENG CHEN et al.** *Energy and Environmental Science,* 2014, vol. 7, 1461 ff
- **LU,Q. et al.** *Nature Communications,* 2014, vol. 5, 3242ff